# EUROPEAN PATENT SPECIFICATION

(11) **EP 1 608 215 B1**
(45) Date of publication and mention of the grant of the patent: **07.10.2009**
(21) Application number: 04720296.5
(22) Date of filing: 12.03.2004
(51) Int. Cl.: A01G 13/02, A01G 1/00, A01G 13/06

(54) **SOIL MEMBRANE FORMING MIXTURE**
MISCHUNG ZUR BODENMEMBRANBILDUNG
MELANGE DE FORMATION DE MEMBRANE DE SOL

(30) Priority: 13.03.2003 NO 20031167
(43) Date of publication of application: 28.12.2005
(73) Proprietor: Johnsen, Torfinn, N-4307 Sandnes (NO)
(72) Inventor: Johnsen, Torfinn, N-4307 Sandnes (NO)
(74) Representative: Isenbruck, Günter
(86) International application number: PCT/NO2004/000071
(87) International publication number: WO 2004/080156

(56) References cited:
- EP-A1- 0 274 851
- EP-A2- 0 177 226
- WO-A1-01/70012
- WO-A1-98/01510
- GB-A- 903 959
- NO-B- 164 106
- US-A- 2 961 799
- US-A- 3 180 097
- US-A- 3 891 571
- US-A- 6 029 395

## Description

### Technical field

This invention relates to a soil, growth and climate-enhancing means in the form of a product concept comprising an organic, environment-friendly, biodegradable, antioxidising mixture of preferably organic materials that can be applied to moist soil in the form of a dry substance or to dry soil in liquid state, and which then solidifies into a degradable film on top of and/or at a given depth in the soil. The properties of the film can be set so that the film regulates or alters the soil's reflective properties, energy level, oxidation properties, rate of decomposition, combustibility, mechanical strength, temperature, liquid evaporation rate, water runoff, greenhouse gas respiration, and nutrient conversion rate on and/or below the surface of the soil mass, thereby allowing germination and growth conditions for plants to be controlled. The film or membrane can be used alone as a nutrient-bearing soil supplement, or can be applied to the soil in combination with standard plant nutrition or fertiliser.

Furthermore, the invention relates to methods of using the mixture according to the invention as a means for carrying out one or more of the following tasks: - revegetating landscape, - strengthening topsoil, - increasing or decreasing the growth rate of useful plants, - controlling/reducing/eliminating the amount of near-ground free radicals and ozone, - controlling the soil and air temperature,
- regulating the water content in the ground, - controlling the amount and rate of release of greenhouses gases emitted by a biomass into the atmosphere, - being a growth medium for seeds, microorganisms and microalgae, - reducing soil erosion and sand drift, - stimulating the humus level, - adapting and establishing ideal conditions/ideal temperatures for organisms, seeds and surface vegetation,
- creating controlled air circulation on the earth surface by creating inverse thermal field zones which form thermal air columns that create and maintain air circulation and energy transport. The film may also be established as a carrier of growth-inhibiting and fire-retardant substances for weed control and the establishment of firebreaks, and may have added thereto environment-friendly agents against unwanted insects and the like.

### Background

The earth's population has increased from about three billion in 1960 to about 6.2 billion in 2002, and is expected to increase to a peak of about 11 billion in around 2050 before slowly decreasing, i.e., in just 90 years the population of the world will have almost quadrupled. The population explosion has represented, and still represents a major challenge with regard to increasing the world's food production to meet the ever more rapidly growing need for more food.

Until the twentieth century the need for more food was primarily met by cultivating new land. Agricultural methods and productivity were largely left to the farmers [1]. However, late on in the twentieth century the availability of new cultivatable areas was greatly limited for a number of reasons, including extensive use of the easiest available areas, preservation of remaining wilderness etc. This meant that it was necessary to find other ways of increasing agricultural production than clearing new land.

Put very simply, it could be said that the answer was modern, knowledge-based agriculture with extensive use of mechanical working power and scientifically based knowledge of how to cultivate land with maximum efficiency. Important factors are the use of synthetic fertiliser, artificial irrigation, chemical weed and pest control, and new gene-modified plants which give greater yields and are more resistant to pests. One example of the significance of modern agriculture is that in 1940 the USA produced 56 million tonnes of maize on 31 million hectares whilst in 1999 it produced 240 million tonnes of maize on 29 million hectares, i.e., a quadrupling of yield per area unit of cultivated land. In 1998 the world's food production was 5,034 million tonnes (source: FAOSTAT), 1999), of which 99% comes from agriculture whilst fishing and hunting accounts for 1%. Had this amount of food been evenly distributed, it would have been possible to give 900 million people more than today's population a healthy diet of 2350 kcal per day. There is just sufficient food in the world today, and the increase in food production has taken place without any appreciable increase in the total cultivated area since 1960. But the battle is far from won. The world population is expected to double yet again during the next 50 years, which means that we must manage to almost double today's agricultural productivity if we are to avoid extensive famine in the world.

However, there are problems associated with modern agriculture. One serious problem that may be a major obstacle to obtaining the necessary doubling of production capacity is that access to fresh water is in the process of becoming scarce in large parts of the world. According to the World Meteorological Organization 70% of the world's freshwater uptake in 1997 was used for irrigation of agricultural areas. And this amount of water was used by just 17% of the world's agricultural areas, which alone account for 40% of the total food production this year. In 1997 the United Nations estimated that one third of the world population lives in areas with a moderate to high stress level on the water supply, and it is expected that as much as two thirds of the world population may experience the same in 2025. It is therefore obvious that optimal use of freshwater resources will be a very important factor in achieving productivity goals.

Another problem that farmers have struggled with throughout the ages is the growth of unwanted plant varieties which compete with useful plants for space and nutrients. In modern agriculture this problem is often solved by an extensive use of chemical toxic substances known as herbicides. Unwanted plant growth is not a problem that is only associated with agriculture, as it applies to almost all forms of green areas where growth of unwanted plant varieties can cause problems. Herbicides are found in the form of both selective and non-selective plant protectants, but all have the drawback that they are relatively expensive and that the use of the chemicals requires trained workers if it is to function optimally. This is because incorrect use can cause personal injury and needless environmental stress as a result of the toxic substances going astray. Another factor is that the use of toxic substances per se causes a burden on the environment and the risk of unintended damage. A well-known alternative to the use of chemical agents is mechanical weed control. But this solution is very labour-intensive and hence expensive, and ,in addition will often promote soil erosion. There is therefore a need for an alternative environment-friendly solution that is inexpensive and that can be used by untrained workers virtually without any risk at all.

It will probably also be necessary to start using land areas which today are unsuitable for agriculture in order to meet future food needs. For example, desert regions have a favourable potential as future agricultural areas if a way could be found to solve the problems of sand drift, water runoff, temperature conditions in the top layer etc. because desert regions could provide large new agricultural areas in regions with a warm, favourable climate for food production.

Simply the fact that man's need for food will increase from today's formidable 5 billion tonnes to almost 10 billion tonnes of food per year in the course of a few decades, suggests that there is a need for environment-friendly means if we are to manage to produce such large quantities in a sustainable manner. And since the decidedly greatest food needs are in poor regions with many untrained workers, these new means should be very cheap so as to permit use in the poor parts of the world where the population is greatest. They should also be sufficiently easy to use so that everyone can use them in the right way regardless of their level of education.

### Prior art

A number of different films and coatings are known for use in agriculture as a cover for surfaces such as fields and plant beds to obtain specific conditions for plant growth. Best known are different types of dark plastic films used as covers to obtain higher temperatures in the soil under the film and thus an increased crop yield.

A plastic film for use in agriculture is known from US 5 729 929. This film is produced from polymer materials such as polyethylene, is supplied in certain widths and consists of longitudinal strips or stripes of clear plastic, white or silver plastic and dark plastic. The film is usually made having a longitudinal strip of clear or white plastic in the centre and stripes of dark plastic on either side. The purpose of such a film is to ensure that the temperature in a furrow or a bed covered by the film is higher along the edges and lower in the central portion which covers the plants. This results in a temperature differential between these areas and increased circulation of moisture, which means that harmful salts will migrate to the edges and prevent growth of weeds there. However, the plastic film is not biologically degradable and must be removed manually and replaced each growing season.

US 4 794 726 discloses a mat that is placed on the soil around the stalks of the plants. The mat consists of fibrous thermoplastic materials which are woven together and supplied in certain widths and lengths. The mat is covered with at layer of aluminium pigments in the form of flakes. The purpose of the mat is that the aluminium flakes will reflect sunlight upward to the underside of the leaves on the plants and thereby increase growth and crop yield. The mat does not let sunlight through and will therefore minimize temperature variations at the roots of the plants. The mat consists of materials that do not degrade, so that it can be used from one growing season to the next.

US 6,029,395 discloses a biodegradable mulch mat according to the preamble of claim 1, which is air and water-permeable.

US 3 775 147 describes a white film that can be applied to the soil by spraying. The film consists of white pigments, a binder and water as solvent. The purpose of the film is to keep the temperature in the soil lower during germination of the plants so as to increase the yield. The patent does not give any indication of ways of adjusting the reflection properties of a film in order to regulate the temperature of the soil under the film.

WO 01/70012 describes a membrane that can be applied to the soil by spraying. The membrane comprises light-reflecting or light-absorbing pigments and/or particles. The purpose of the membrane is the regulation of the albedo of the earth surface depending on the membrane's content of pigments.

NO 20003587 discloses a film-forming powder mixture that is dissolved in a solvent and then applied to the soil in liquid state in order to harden into a membrane in a upper layer of the soil. The powder mixture should comprise:
- a binder of proteins;
- a fibrous material such as cellulose, paper fibres, plants fibres etc.;
- a solvent such as water or sap;
- at least one dark and one light pigment;
- an animal or vegetable oil; and
- an ammonium compound.

The mixture may also advantageously have a foaming agent added thereto and/or a pH regulator, and the mixture should preferable be made of raw materials that are organic waste so that it is very inexpensive, completely biodegradable and helps to solve a waste problem from other industries. In addition, the membrane per se will be nutrition for the plants.

None of the cited patent specifications provide sufficiently sustainable solutions, and will in addition only provide a solution to some of the problems and challenges encountered in high-efficiency sustainable agricultural production referred to above.

### Object of the invention

One of the objects of the present invention, therefore, is to provide a mixture of preferably organic materials which, when added to the soil, forms an environment-friendly, biodegradable and antioxidising membrane on top of and/or at a given depth in the soil which has a soil and growth enhancing effect without impoverishing the soil.

Another object is to provide a mixture of preferably organic materials which, when added to the soil, forms an environment-friendly, biodegradable and antioxidising membrane on top of and/or at a given depth in the soil, where the ability of the membrane or film mass to reduce biologically harmful near-ground ozone and free radicals is optimised.

Yet another object is to provide methods of using the mixture according to the invention for one or more of the following tasks at the same time: regulate the albedo of the ground surface and thus the temperature on the ground surface and in the growth zone; strengthen the topsoil; reduce or prevent water runoff or evaporation; limit or control respiration of biogases; adapt respired CO₂ volume from the biomass to the absorption potential or absorption capacity of the CO₂-absorbing vegetation mass; increase the root access to and conversion of fluid and nutrition; minimise or prevent erosion of the soil surface and/or the humus layer; reduce/prevent growth of unwanted vegetation; establish thermal zones on surfaces to create currents of air; reduce or eliminate near-ground ozone and free radicals.

### Brief description of the invention

The objects of the invention are achieved by that set forth in the following description of the invention and the attached patent claims.

This invention relates to an environment-friendly, biodegradable soil and growth enhancing mixture of preferably organic material that can be applied to moist soil as a dry substance or to dry soil in liquid state, and which then sets or solidifies into a degradable, gas-permeable film on top of and/or at a given depth in the soil. The mixture may advantageously be provided in the form of a basic mixture consisting of a dry powder of dried and ground organic material comprising a thickening and/or setting agent, and one or more pigments. This basic mixture will, when taken up in an appropriate amount of solvent, dissolve and subsequently form a more or less liquid mass which will set or solidify into a breathing, i.e., gas-permeable, film or membrane after application to the soil that is to be treated. All components of the basic mixture must be water-soluble and together they should have an antioxidising effect on the environment. I.e., at least one of the components must be antioxidising and the rest of the ingredients must be chosen to ensure that the mixture as a whole has an antioxidising effect on the surrounding environment. Preferably all the ingredients of the powder mixture should have an antioxidant effect. To further increase the antioxidising effect of the resulting film or membrane according to the invention, it would be advantageous to saturate the dry powder mixture with electrons to at least neutrality, but it is also possible to include oversaturation, thus supplying the powder mixture with an excess of electrons. A suitable method for achieving electron saturation of the powder mixture is by using ionisation, but any known method may be used to obtain this electron saturation.

Through the controlled addition of amounts of additives to the basic mixture, or optionally the solution formed by the basic mixture, the resulting film or membrane according to the invention can be endowed with one or more of a number of different properties as described below. The additives preferably comprise one or more of the following types of substances: pigments, binders, water stabilisers, preservatives, antioxidants and agents for regulating the electrical conductivity of the film, mineral salts and pH regulators. In addition, in some cases it may be necessary to use reinforcing materials and additives such as biologically degradable fibre and fillers. A virtually universal means is thus obtained which can be used to regulate one or more of the following factors that affect growth and germination conditions for vegetation: temperature, moisture and nutrient uptake in the soil around the roots or seeds. It reduces surface erosion, binds seed in the germination period, constitutes an impenetrable obstacle for seed-germinating weed species, prevents/reduces runoff of water to the underlying soil, forms an almost non-combustible surface cover etc.

Organic material is used to mean any material that originates from the animal or vegetable world, and which in a dried, ground (pulverised) state can be dissolved in water. Dissolution in this context means both chemical dissolution and mechanical dissolution, i.e., chemically dissolved in the form of ions, complexes and the like, and mechanical solutions in the form of emulsions, dispersed particles and the like. It is also conceivable that other polar solvents could be used instead of water, but water will normally be preferred because of its availability and low cost.

The invention can be used in all areas where there is a desire to regulate growth conditions for plants such as in agriculture, horticulture, green areas, sports grounds, roadsides etc. Furthermore, by varying the amount of setting agent or thickening agent, it is possible to control how far the fluid will penetrate into the soil before it sets into a solid film. Thus, ways of regulating water runoff and other growth conditions for vegetation up to a depth of several metres, preferably to a depth of about 1 metre are obtained.

The wide range of potential obtainable properties of the film or membrane according to the invention makes it suitable for regulating growth conditions for useful plants in virtually all conceivable climate zones and soil types, besides being used to adjust the growth conditions in the soil in order to re-establish vegetation in areas which today are climatically unsuitable for plant growth. This applies both to areas which are naturally too warm, too dry, too cold and/or to areas with too much surface erosion to allow plants to become established in a natural way.

The film or membrane according to the invention can be endowed with properties that enable it to be used for other purposes such as prolonging the growth season by melting snow, providing a fire-retardant corridor in terrain subject to forest fires, serving as a weed and/or insect controlling surface film, serving as a decorative cover until newly sown or planted vegetation has grown etc.

One aspect of the invention is that it can be produced from antioxidising organic substances or compounds that are biologically degradable, serve as nutrition for plants and which in addition are selected natural, industrial and/or household organic waste substances. This results in an environment-friendly means/soil-enhancing means that has little or no harmful effect on the ecosystems in which the invention is used, and which in addition helps to reduce some waste problems. Moreover, the use of waste will make the raw materials very cheap to purchase, some will be free of charge if collected and some will even involve payment to those taking them away, so that the invention represents a very inexpensive antioxidising soil and growth enhancing means.

Another aspect of the invention is that by using a surface film or membrane it is possible to control or adjust the albedo of a land area and thus establish thermal polar "islands" which either cool or heat the air above the land area, thereby creating thermally induced currents of air which can withdraw moisture from or add moisture to the area as required. Thus, a means is obtained which can bring about changes in precipitation patterns thereby making naturally unsuitable areas suitable for useful plants such as corn, maize etc.

Another aspect of the invention is that by using a surface film or membrane according to the invention, it is possible to alter or regulate the albedo of the area with a view to lowering its CO₂ respiration rate. When used extensively (large areas), the invention can be an inexpensive and effective means for fixing carbon in a biomass, thereby helping noticeably to reduce a country's total emission of the greenhouse gas CO₂. By combining this effect with the re-establishment of vegetation in areas which today are naturally unsuitable for plant cultivation, it is possible to fix really large amounts of CO₂ from the atmosphere as biomass. This feature of the invention may be a valuable and useful contribution for many nations when the obligation to reduce greenhouse gas emissions is to be met, because by fixing atmospheric CO₂ in the form of trees, it is possible to fix CO₂ for many hundred years before the tree mass rots. Before then, the oil age will be over so that the pressure on the greenhouse effect from today's use of fossil fuels will be offset to some extent.

Yet another aspect of the invention is that the albedo regulation can be used to change local precipitation patterns. This albedo regulation can, for example, be used to provide precipitation in dry coastal areas by laying out a surface membrane or film with low albedo compared to the albedo of the surrounding soil in an area of from a couple of to many square kilometres (as required). This covered area will thus be a local area zone that is heated by sunlight in part to a much greater extent than the surrounding land masses, so that upward currents of air, also known as thermals, will be generated. Thermals create a local low pressure which draws in air from surrounding air masses, thereby allowing the establishment of a guided and controlled current of air from the sea across the dry land areas. Because the thermals will lift this air up into higher air layers, it will be cooled and the moisture content precipitated as rain. In this way, it is possible to obtain water for coastal desert regions.

The invention is intended to be put on the market as a basic mixture in the form of a dry powder that is produced by drying and grinding an organic material, preferably whilst supplied with UV light and exposed to a negative ionising E-field. Negative ionisation means that the soil mass is exposed to an E-field with negative polarity to eliminate any positively charged free radicals (oxidants) and to ensure that the mass is saturated with electrons, so that its antioxidising properties are enhanced. Both the UV radiation and the ionisation will kill any microorganisms and sterilise the basic mixture. This is an important feature in the cases where there is a danger that the organic raw material may contain toxic or pathogenic microorganisms.

On use, one or more of the aforementioned additives are added to the basic mixture which is then dissolved in water. It is possible to replace water completely or partly with organic fluid pressed from fruit, berries, plants or general succulent vegetation. The solution can then be sprayed onto the soil area to be treated where it then sets into a solid, tacky film. The liquid is suitable for all known types of spraying equipment from handheld spraying devices to mechanical means, including planes. Alternatively, the dry powder mixture, the basic mixture including selected amounts and types of additives, can be applied in a dry form, i.e., as a powder that is sprinkled over the soil to be treated and then wetted either because the soil is sufficiently moist to dissolve the powder and form a film, or because the same area over which the powder has been spread is actively watered. The liquid mixture or the powder mixture may also be mixed into the soil using a plough and/or other mechanical means equipped with nozzles for injection of the fluid or dry powder. In short, the invention can be applied using all conventionally known methods and equipment for the distribution of a liquid or dry powder over a surface. The same applies to known technology for incorporating the liquid or powder into the soil.

The invention is just as suitable for use on a small scale for a private person's garden as for use on a large scale in industrial food production. It is envisaged that ready powder mixtures for a number of standard conditions and use applications will be available, and that the users will have access to the basic powder mixture and the additives in loose weight so as to be able to tailor the film according to their requirements. Thus, a soil enhancing means is obtained that is simple, inexpensive, very flexible and suitable for a number of different purposes as described above.

The invention is a simple and very inexpensive means that is adapted to have an impact on a number of conditions which to a greater or lesser extent represent an environmental and/or economic problem today:
1) Global warming in that the reflection of the product, i.e., the resulting film or membrane according to the invention, can be set at a desired level, so that the albedo of the soil area can be regulated in order to reduce the amount of incident radiant energy from the sun that is absorbed by the ground.
2) The CO₂ account in that the product can regulate the respiration rate (as a consequence of the temperature control) and thus the amount of CO₂ that is released from the biomass in the soil into the atmosphere.
3) Water shortage in that the product reduces or controls the rate of evaporation of water vapour from the ground.
4) Soil erosion in that the product can increase the mechanical strength of the topsoil, lower its temperature and increase soil moisture.
5) Desertification in that the product binds sand surfaces and moisture.
6) Soil oxidation in that the product can be set to control natural oxidation processes in and above the microlayer.
7) Species migration in that the product can stabilise or recreate cultivation conditions in, for instance, drought-affected areas, and in that the product can be used to create local thermals with subsequent precipitation of moisture (rainfall).
8) Vegetation fires in that the product is able to contain such fires by forming non-combustible corridors in forests or other natural vegetation that is subject to fires.
9) Refuse mountain in that the product can be produced of biological or organic waste which thus avoids the combustion and storage stages.

### Detailed description of the invention

The invention will now be described in more detail, and examples of preferred embodiments and uses of the invention will be given.

The inventive idea is to provide a basic dry mixture of ground, dried organic raw material with added thickening agent and/or setting agent and one or more pigments, and either to dissolve this dry mixture in water in order to obtain a liquid that can be sprayed onto a dry soil surface, or to spread the dry powder mixture in powder form across a moist soil surface. In both cases the basic powder mixture will thicken or set into a film or membrane on top of or at a given depth in the soil.

Organic raw material in this context means any material that originates from the animal or vegetable world and which in dried, ground (as finely as pulverised) state can be dispersed/emulsified/dissolved in water or liquid and which either itself contains or has added one or more of thickening agents, gelatin, adhesive compounds, fibres, fillers and the like so that the materials, when mixed, will form a film or membrane according to the invention when the mixture is applied to a soil. Furthermore, the materials should preferably be a waste product from the natural environment, the food industry and/or the agricultural industry etc. so that an environmental synergistic effect is obtained by reusing waste material. As organic raw material it is preferable to use vegetable debris that is soluble in water in a dried, pulverised state because it is an inexpensive and readily available raw material. Most preferred is a dry powder comprising one or more of dried and ground seaweed, sea grass and/or kelp, fruit peel, fruit flesh, vegetable peel and pips, and husks, leaves and stalks from general vegetation. The term "sea grass" is used to mean plant species from both fresh water and seawater that normally are not characterised as kelp or seaweed, for example, the grass species Spartina and reeds that grow in both saltwater and fresh water. Animal species that resemble plants can also be used, such as sea pens, sea lilies and the like.

By adding to and mixing into the basic dry mixture (before it is dissolved in water) one or more of the following additives: binder/reinforcing material, preservative, pH regulator, antioxidants, nutrients and means for regulating the electrical conductivity of the film or membrane, it is possible to endow the film or membrane with properties which strengthen (vitalise) the soil and promote growth of vegetation. More specifically, by adjusting the chemical composition of the film or membrane through the addition of additives, it is possible to adjust one or more of the following properties: mechanical functionality (strength, elasticity), liquid permeability, light reflection properties, electrical conductivity, durability/rate of degradation etc, and thus obtain the possibility of adjusting mechanical quality, temperature conditions and nutrient uptake, reducing production of near-ground free radicals, water runoff, evaporation rate, combustibility, rate of erosion, control of unwanted germination and growth of weed species etc. in the uppermost layer of the soil. In addition, by a conscious choice of raw materials it is also possible to endow the film or membrane with insect repellent properties. Examples of possible additives which have insect repellent properties are lavender sap, balsam pine sap etc. In short, the film or membrane according to the invention will be a very flexible soil, growth and environment enhancing means with a wide range of applications.

Vegetation is used in this context to mean all types of vegetation such as plants and trees and non-flowering plants such as algae, fungi, lichens, moss, ferns and the like.

The upper layer of a solid surface on the earth means primarily the upper layer of the ground surface from 0.1 mm to 50 mm depth depending on the nature of the soil. If the film is laid straight onto rock, for example, the upper layer would be the rock surface.

One aspect of the invention is that all components of both the basic dry mixture and the additives can and should preferably be selected from substances that are organic and which at the same time are also vegetation nutrients, so that the film or membrane is a sustainable means which at the same time will function as a fertiliser. The fertiliser effect may be further enhanced by the addition non-oxidising artificial fertiliser and/or non-oxidising natural fertiliser. In addition, all the components of the film or membrane can be selected from substances or compounds which today are characterised as industrial and/or household waste, thereby converting waste into a useful productivity-increasing resource in, for example, agriculture.

Another aspect of the invention is that it is a means for regulating the albedo of a ground surface and/or a means for re-establishing vegetation in areas which today are naturally unsuitable for plant cultivation. Through extensive use of the invention, it will be possible to re-establish vegetation on large land areas and thus alter the albedo of these areas so that they absorb less of the incident sunlight and thus fix large amounts of CO₂ from the atmosphere as biomass. Adjusting the volume of CO₂ emitted from the biomass in relation to the absorption capacity of the biomass by regulating the temperature of the biomass via albedo regulation will make it possible to adjust the volume of CO₂ emitted from the biomass in relation to the absorption capacity of the vegetation, thereby ensuring that the vegetation absorbs the entire volume of CO₂ released from the biomass. It is also possible to choose to adjust (regulate) the emission from the biomass to zero or a low level so that the vegetation is forced to make use of available atmospheric CO₂.

The invention will have a favourable effect on both these two factors, and can, when used on a large scale, help noticeably to reduce the ongoing increase in the average temperature of the lower atmosphere because this increase is believed to be due in part to the fact that areas previously covered by vegetation have been converted into dark areas (developed areas, deforested areas and the like) and because the use of fossil fuels has increased the content of the greenhouse gas CO₂ in the atmosphere by 30%.

Tests carried out in desert regions in connection with the development of the invention show that in favourable cases it is sufficient to use as little as 1 gram of dry matter per m², so that the use of 1 kilo of basic mixture (dry powder) according to the invention covers a surface area equivalent to 1000 m². This means that 1 tonne of the dry powder mixture according to the invention will cover a desert area of about 1000 km². Practical tests in desert regions have shown that dry matter quantities of as little as about 0.3 grams per m² are sufficient to form a top membrane that binds the top layer of the sand and prevents sand drift as a result of wind action. Other types of soil surfaces require larger or smaller amounts of added dry matter depending on the soil type and surface characteristics. Although in practice it would hardly be possible to operate with such small amounts of dry matter per m², these tests show that the powder mixture according to the invention may be an extremely economical and thus inexpensive soil enhancing means which can realistically be used on very large areas.

It is known that the CO₂ respiration rate of a biomass is dependent on the temperature of the biomass. Measurements and tests carried out in connection with the development of the invention show that the respiration rate of CO₂ from the biomass is reduced by about one third if the soil temperature is decreased from 30 to 20°C.

Theoretically, a change of 1% in the albedo of a body will cause a change in temperature in the body of about 1.8°C. In agriculture, the change is slightly different in practice because of the influx of distant heat from surrounding and deeper heat sources. In tests carried out in Central America, a reduction in respired CO₂ volume per m² of sugary biomass from 30 grams to 9 grams per day was obtained by using a membrane that reflected 86% of incident sunlight, and lowered the temperature of the biomass from 32°C to 18°C. Respiration in this soil was initially extremely high because of the high sugar content, high temperature and moisture and vigorous microbiological activity (supercomposting). Despite the extremely high respiration in this case, the measurements show that the invention has a substantial potential as a means for reducing respiration volume/rate.

As an example, it is assumed that the biologically active soil in hot regions may have the capacity to produce on average about 10 grams of CO₂ per m² of ground surface per hour when exposed to direct solar radiation.

During the development of the invention many measurements of CO₂ respiration from different types of biomass were made. To measure the CO₂ release from biomass, a calibrated CO₂ meter with a measuring probe mounted in a sample chamber having a volume of 1 litre is used. The chamber is placed in communication with the biomass surface and collects the gas released from the biomass.

In tests the CO₂ concentration in the container rose by 300 ppm per minute. This is equivalent to 3.3 grams of CO₂ per m² per hour, or 80 grams per day per m² at a stable mass temperature.

If it is assumed that a biologically active soil has the capacity to produce 100 grams of CO₂ per m² per day, this is equivalent to 100 tonnes of CO₂ per km² per day, or 36500 tonnes of CO₂ per km² per year. The area indicated above (1000 km² covered with 1 tonne of high-reflective membrane mass) will be capable of reducing the amount of respired CO₂ by at least one third from 36.5 megatonnes per year to 24.3 megatonnes per year so that a total of 12.2 megatonnes of CO₂ is fixed in the biomass per tonne of dry matter used in the membrane mass spread on the area in an amount equivalent to 1 gram per m² ground surface. In addition, there is the saved CO₂ emission equivalent to 3 tonnes of CO₂ per tonne of non-combusted biological waste, reduced need for energy-consuming and CO₂ releasing fertiliser production, lower energy-consuming transport and storage requirements etc.

Although this is a theoretical optimal amount which in practice cannot be achieved for most climate zones and soils, it shows that the invention has a considerable potential for reducing the amount of naturally respired CO₂ and evaporated water from the biomass into the earth's surrounding atmosphere. The use of the membrane also allows the emission from vegetation-covered areas to be set at zero by lowering the temperature and respiration to a level that means that the biomass does not emit more CO₂ per unit of time than the local vegetation manages to absorb.

The key factors in the total climate account when the product is used are as follows:
- 2.4% of all oil used globally is used in the production of fertiliser.
- Near-ground ozone in the microlayer is produced by standard fertiliser such as compound fertiliser.
- One tonne of combusted waste produces 3 tonnes of CO₂ + water vapour, particles and toxic gases. The energy from the combustion heat helps to warm the air or the atmosphere.
- Evaporation from moist humus-rich soil at 35°C soil heat and about 800 watts solar radiation, is measured to be about 1.5 litres of water ± 25% per m² /per hour or 36 litres/m² per day. The amount of water from 1000 km² is thus 36 gigatonnes per day. By using a high reflective membrane which doubles the reflection of thermal energy from the sun, the energy supply to the topsoil will drop from about 800 watts to about 400 watts. The soil temperature is thus lowered and the volume of water evaporation when such a membrane is used is measured to be 0.8 litres/m² per hour, equivalent to a difference of 0.7 litres per hour ± 25%. For an area of 1400 km², this amounts to 16.8 gigatonnes per day, or a saving of 19.2 gigatonnes per day.

Albedo in this context means the ratio of incident electromagnetic radiation (light) reflected to that absorbed. Electromagnetic rays refer to all types of electromagnetic waves that strike the surface of the earth such as radio waves, infrared rays, visible light, ultraviolet rays, X-rays and gamma rays. The earth will receive most of its electromagnetic radiation from the sun in the form of infrared rays, visible light and ultraviolet rays in the form of UVA and UVB.

As mentioned, the invention represents a flexible solution that can be used for a number of purposes in agricultural production and all forms of care of green areas, sports grounds, parks etc. The invention can also be used for revegetating fallow land, desert etc., and as a decorative mass when coloured (coloured film without any nutrient value) on stone and concrete surfaces, for example, rubble masonry surfaces in connection with railways, road systems, quay installations etc. Furthermore, by varying the amount and/or type of thickening or setting agent, it is possible, for example, to obtain a liquid of varying setting rate, and thus control how far down in the soil the liquid is allowed to penetrate before it sets into a solid film or membrane. This allows the possibility of having an impact on the soil under the roots of plants, at the roots and/or on top of the surface. All types of thickening or setting agents can be used provided they are antioxidising and biologically degradable. A preferred agent for use as thickening agent is xanthan, also known as xanthan gum (also acts as a softener in the film). Xanthan is preferred because it is an inexpensive polysaccharide that is completely safe for the environment and because it represents a renewable resource. Different alginates have also be found to be useful together with or instead of xanthan.

Furthermore, in cases where the invention sets into a film or membrane on the surface, it is possible, by adding controlled amounts of binder, to control the mechanical properties of the film so that it binds loose particles on the soil surface with the object of controlling or preventing surface erosion. It is also possible to add sufficient binder to produce a film or membrane that is completely impenetrable to airborne seeds, thereby enabling the film to be a mechanical and highly effective weed control means in that it prevents airborne seeds from finding anchorage in the upper layer of the soil. In order to further increase the effect as weed control means, films or membranes intended for vegetation control could have salt added to give them a minimum concentration of 300 ppm salt. Most plants, with the exception of coastal vegetation, have a tolerance limit just below this level. However, sufficient amounts of salt can be added so that even coastal vegetation finds it difficult to become established. In this case, the salt concentrations should be about 3000 ppm. In addition to the main components, this type of film or membrane should have added thereto large concentrations of wax and non-water soluble ingredients to prevent the salt from dissolving too quickly in the event of rain or another supply of water. A film or membrane of this kind will be of low solubility and emit small amounts of salt into the soil over time so that the salt conversion capacity of the soil is not exceeded, whilst the actual film or membrane is too salty for seeds and germinating young plants to become established therein. Thus, herbicide-free weed control is obtained which is not burdened with the erosion problems associated with traditional weeding methods. On the contrary, a weed-inhibiting film or membrane will also help to bind loose particles to the soil surface, so that a favourable synergistic effect is obtained. Tests have shown that the combustibility of the film is reduced by an increased addition of salts. Films with a salt content of more than 500 ppm can be characterised as non-inflammable.

A third application of a surface film or membrane with good binding properties is that it can be used to hold in place seeds sown on top of the soil surface so as to increase the number of seeds that will begin to germinate. In this case, the film or membrane is laid immediately after the seeds have been sown. As binder, all organic glues and adhesives having a high protein content such as animal glue and/or casein glue and/or albumin glue can be used. Animal glue can be made of animal waste products such as the skin, bones and horns of animals and the skin, fins and bones of fish. Casein glue can be made from milk, dairy waste and vegetable proteins. Albumin glue can be made of blood, blood waste and of egg white. Fibres which bind to each other and thus bind up the mass in the film or membrane can also be used provided they are degradable in the natural environment and non-toxic. Moreover, there are glues recovered from certain marine plants such as the adhesive agar, a gel-like substance that is used as binder or thickening agent. Soaps etc. also constitute excellent glue or adhesive substances suitable for use in this invention. Other examples are alginic acid from kelp which is used as, among other things, a stabiliser in the food industry and has an excellent binding effect when it is mixed with water and soil dust. An elastic, almost rubber mixture is then obtained. Acorn barnacles, latex and sap may also be mentioned as particularly suitable binders. Acorn barnacles, in particular, which, *inter alia,* constitute troublesome fouling on boat hulls etc. contain a powerful glue that is excellent as a binder for soil.

Examples of suitable and preferred fibres are cellulose fibres from ground wood, bark, cardboard, paper, hemp and the like, ground plant fibres from blades of grass, ears of corn, straw, rushes, lichen, moss, peat, roots and the like and fibres from textiles such as wool, cotton, viscose, silk, linen and the like, and animal fibres such as hair, bristles and the like. Reinforcing fibres such as glassfibre, rockwool fibre, carbon fibre and the like may be used in applications which require the film or membrane to have extraordinary mechanical wear resistance. In cases where rapid vegetation establishment is desirable, it is preferable to use short, porous, liquid-saturated fibres because the hollow space in the fibres can be used as carrier and gradually release nutrients into the soil.

The invention may be used to regulate or control the temperature in the top layer of the soil by adding of varying amounts and types of pigment to the liquid in order to obtain a film or membrane with very different reflection/absorption properties for incident sunlight. It is a well-known fact that the surface of the earth receives virtually all external energy in the form of sunlight, and a great deal of this energy is absorbed by substances and plants on the surface of the earth. Regulating albedo for the top layer of the soil by decreasing or increasing the degree of sunlight that is absorbed by the film or membrane as required, will result in a lowering of the temperature by increasing the degree of reflection in areas where it is too warm for optimal germination conditions, or the temperature can be increased by increasing the degree of absorption in areas with a colder climate. This property of the invention represents a simple and suitable means that can be used to promote plant growth by ensuring that the temperature in the soil does not exceed boundary values for seed germination and plant growth in almost all conceivable climate zones. All types of pigments known to the skilled person can be used provided they are not characterised as environmentally harmful or toxic. It is preferred to use pigments which also will serve as nutrients for vegetation and which also can be obtained from materials or substances which today are characterised as industrial or household waste.

To increase the degree of reflection of the film or membrane, it is preferable to use one or more of the following materials in dry powder form as pigments; stone, lime, sand, clay, chalk, shells and the like, white mineral pigments such as TiO₂, white plant dyes and/or white plant fibres such as cotton, bog cotton or algae-based ingredients having light characteristics, etc.

To reduce the degree of reflection of the film or membrane, i.e., increase its degree of absorption, it is preferable to use one or more of the following materials in dry powder form as pigments: ash, coal, soot, carbon black, graphite and other forms of elementary carbon, earth pigments such as ochre, bones and shells from animals, shells, fish-scales, mineral pigments, plant dyes, plant pigments, algae-based ingredients having dark characteristics etc.

Microalgae may also be used as pigment. These may have a wide range of colours so that they can be used both to increase and to decrease the degree of reflection of the film or membrane.

The invention may also be rendered suitable as a water-regulating means by adding water-stabilising compounds so that the film or membrane according to the invention is more or less impermeable to water or water vapour. Thus, by laying a film or membrane on top of the soil, it will be possible to reduce the water loss in the form of evaporation from the ground to a minimum if the addition of water-stabilisers is optimised so that the film or membrane is of maximum impermeability to water vapour, whilst retaining the ability to allow rainwater or surface water through. Thus, an environment-friendly, inexpensive and simple tool for optimising water consumption in agriculture, horticulture, green belts etc. is obtained. In practice, it will be necessary to adapt the water permeability of the film or membrane so that it admits as much water as the local soil does, so as to prevent the membrane from causing problems with surface water in connection with precipitation and/or drying out of the plant roots.

The effect as a water-regulating means can be further enhanced by using two films or membranes, one laid on the surface as described above, which limits evaporation and allows surface water through, and a film or membrane which forms an almost watertight layer in the soil just below the roots of the plants, in practice usually about 1 metre down in the soil. This second deeper film or membrane is obtained by adding a larger amount of water-stabilising compounds so that the film or membrane becomes completely or almost completely impermeable to water. In this way, a film or membrane is obtained under the growth zone in the soil which holds back water by eliminating or dramatically retarding runoff to deeper layers of soil so that a greater amount of or all water becomes available to the roots of the plants. This use is particularly relevant and suitable for areas where the ground water level is low, for areas with sandy soil etc. This solution is also highly suitable for re-establishing vegetation in desert areas and other areas which today have had their vegetation damaged because of soil erosion etc. This use of the invention, for example, to establish green areas around settlements in desert areas etc. will result in a contribution to the fixation of CO₂ from the atmosphere and thus reduce the man-made increase in the greenhouse effect.

In the case of the water-stabilising compounds, it is also preferable to use biologically degradable compounds that serve as nutrients in the soil. These can preferably be obtained in the form of industrial and/or household waste. Examples of suitable water-stabilising compounds for the film or membrane according to the invention are organic waxes, oils, mucilage, plant oils etc.

Two methods for laying or forming a deeper moisture-proofing layer in a soil mass are envisaged. One is by first spraying the soil surface with a liquid mixture according to the invention, wherein the amount of thickening agent has been reduced so that the liquid penetrates some distance into the soil before it sets into a film or membrane. The other is by using a specially designed deep-ploughing plough.

Tests have shown that the viscosity of the membrane mass and the particulate structure and size of the soil mass determine the depth for the film formation. If the soil, for example, desert sand, has a particle size of 1 mm in the top layer, it will often be found that the sand profile has smaller particle sizes the deeper measurements are made in the structure. If it is decided to establish the film or membrane in the top layer, from 1-10 grams of dry matter per litre of water per m² soil surface are usually used. A typical permeable film of membrane is then obtained which is surface-established and about 1-5 mm thick. Reducing the dry matter content and increasing the amount of liquid per area results in the binders being established in a specific layer further down in the soil profile. This layer is formed depending on the size of the voids between the soil particles in the structure and the viscosity of the structure, and must be determined in accordance with analyses of the soil profile, or by determining the dry matter proportion by testing out different dry matter amounts on the soil in question.

If the film or membrane according to the invention is to be established to stabilise a level-determined water reservoir where the membrane constitutes a moisture barrier some distance down in the soil, it is envisaged that the film could also be established by using a specially designed plough, so that the liquid mixture that sets to form the film is ploughed into the soil using a specially designed plough. In this case, the membrane-forming liquid is sprayed into the soil at a chosen depth below the soil surface to form a covering that inhibits or prevents the water from sinking to levels where the vegetation is not able to make use of it. The plough may, for example, consist of a vertical, hollow share connected to a deep-lying horizontal share with nozzles mounted thereon. The membrane forming liquid is sprayed out via the nozzles mounted on the horizontal share at a chosen depth and in a chosen amount.

The water-stabilising substances will, besides binding the water, also serve as a conserving agent for the film according to the invention by reducing the water solubility of the film and thus its degradation rate. The film should be capable of allowing rainwater through and at the same time have an inhibiting effect on seed germinating weeds for up to 3-4 months or more in order to be suitable as mulch for use in agriculture and horticulture. In cases where the invention is used as a moisture-proofing layer on the soil, it is of interest to have maximum durability; the layer should function at least for as long as the duration of the growing season.

In general, when the invention is used to recreate vegetation, the film or membrane formed on the surface has the task of creating optimal germination conditions for seeds which are either added to the topsoil in the membrane gel or which are in the upper layer of the topsoil as a result of normal sowing. During the first days after sowing, the seeds should establish roots which must find sufficient anchorage in the ground for the roots whilst the plant body must find sufficient access to light and air by stretching upwards from the ground. The roots must be established as deep as possible to obtain optimal liquid and nutrient access and the plant stalk must obtain its optimal position above the topsoil. In such a case, the film or membrane should be adapted so that the germinating plant species has optimal conditions in the form of the correct ideal temperature and optimal liquid and nutrient access. After the root system has become established in the soil and the plant body has appeared above the topsoil, the film or membrane should slowly decompose and be consumed by the vegetation as nutrition. Its purpose has been to establish optimal conditions during the germination process until the vegetation is re-established.

During practical tests in desert regions it has been found that the application of a surface membrane or film according to the invention loosens a hard and almost impenetrable eggshell-like salt-containing surface film that is often formed in desert regions, and which can be so strong that, besides preventing seed-germinating species from becoming established, it allows plants that propagate by sending out root runners to spread. Another favourable effect is that when this desert film is softened, the salt will be washed out and penetrate deeper into the sand. The membrane or film that is formed remains elastic and permeable and thus prevents re-establishment of the vegetation-inhibiting sand shell. This is a surprising effect of the invention that is believed to be a major contributory factor in the re-establishment of conditions for vegetation formation in the area.

The rate of degradation of the membrane mass is determined by several interacting factors. These include the composition of the mass, applied mass per area and germination density on the soil surface (number of seedlings per area). In addition, the microbiological activity in the biomass and the temperature - moisture - load interrelationship play a major role. By increasing the amount of water stabiliser and reducing the amount of water, a higher degradation resistance is obtained. The quantitative ratio is determined by precipitation in the area of use.

In cases where the membrane is to act as a pigmented cover without underlying vegetation establishment, it is saturated with wax and water-stabilising substances in amounts that result in the film having a low solubility rate/long durability. The ratio of dry matter to water stabiliser can in such cases be as much as 80% water stabiliser and 20% membrane substance, but may of course have all values from this upper limit down to insignificant and barely measurable amounts of water stabiliser.

In cases where a film or membrane is to be established purely for the purpose of binding loose particles in the soil surface, i.e., as an erosion-inhibiting cover, the film or membrane can be made from a pure binder solution consisting of from 95 to 99.7 % by weight water and from 0.3 to 5 % by weight alginate.

The invention can also be used as a means to enhance plant growth by increasing the electrical conductivity of the soil, thereby improving the conditions for transport of ions in the soil around the plant roots. The nutrient uptake of the plant roots is thus facilitated or increased in that ionic minerals can more easily migrate to the plant roots. Tests carried out by the inventor have shown that a minimum of 2 milliSiemens per square centimetre (mS/cm²) or more is necessary to give the soil an optimal ion transport capacity. The desired conductivity can easily be obtained by the addition of some parts per thousand of ionic compounds such as readily soluble salts of the metals potassium and/or calcium. These salts are preferred because they are naturally occurring and because they are important minerals for plants. It is also possible to use components in the film which conduct electricity, such as carbon powder, ash and the like to make the actual film conductive of electricity.

Another feature of the invention that helps to increase the nutrient uptake of the plants is the possibility of making the film surface electronegative, i.e., saturate it with excess electrons or ensure a high earth voltage so that the surface is negatively electrically charged or has greatest possible potential difference in relation to the atmosphere, more specifically gas molecules and floating particles aerosols etc. in the air above the ground. It is known that moist ground is normally electrically negative in relation to particles, ionised gases, pollen etc. in the air above the ground. When the soil dries out, is polluted, subjected to friction from air etc. the ground gradually becomes less negative and may end up electropositive relative to the atmosphere. Studies the inventor has made show that pollen grains and other organic floating particles in the main have positive electrophysical character (electron deficiency) and are thus attracted to surfaces with excess charges. This finding is consistent with observations of the floating pattern of visible seeds such as dandelion, where it is clearly seen that they have a tendency to float above electropositive surfaces such as asphalt, concrete, densely planted lawn surfaces etc. before falling to the earth on surfaces of electrically neutral and negative character. Pollen counts also show that the number of pollen grains per cm² is greatest on the surfaces that are most negative, i.e., have greatest electron excess. Thus, by making sure that the film or membrane according to the invention is negatively charged, it is possible to ensure that it will actively counteract the tendency of the ground to be electropositive, so that a soil covered with a film or membrane according to the invention will to a greater extent than uncovered soil attract particles such as dust, pollen, water vapour from the air just above the ground, and in this way the soil will be actively supplied with nutrients from the air. Tests carried out by the inventor show that the particle density on a negatively charged film or membrane according to the invention is three times higher than on a positively charged film or membrane. Furthermore, the film or membrane according to the invention will be electronegative when it has a pH > 7 and electropositive when the pH < 7. To ensure a sufficiently high pH, it is preferable to add pH regulators such as salts of alkali metals (sodium, potassium, calcium etc.), plant sap, ash, basic minerals etc. These pH regulating additives are also favourable in the sense that they are nutrients for plants as well, and thus environment-friendly and biologically degradable.

Another feature which according to the inventor is assumed to be particularly important for promoting plant growth is to endow the film or membrane according to the invention with the ability to destroy oxidants in the air just above ground level, the so-called microlayer on the ground surface. Of such oxidants, i.e., substances that have a high electron affinity and thus the ability to oxidise other substances, ozone is particularly important and is known for damaging plants. It is estimated that in Norway alone ozone damage of crops represents a financial loss of about NOK 400 million each year. The inclusion of the feature of the ability to eliminate oxidants, including ozone in the microlayer is based on a discovery made by the inventor which shows that the microlayer on the ground surface has an elevated concentration of ozone when the ground is illuminated by sunlight and that the ozone concentration easily reaches concentrations of 40-80 ppb. These are concentrations that are just below and above the tolerance limits for plants, and which are thus believed to be harmful or inhibiting for plant growth. This is a discovery that is contrary to the usual view among experts in this field, which is that the ozone concentration in air is primarily air-transported and that the concentration in the air therefore decreases from about 2 metres above ground level and reaches zero at the earth surface because ozone is very unstable and readily degrades when in contact with soil and plants [2]. But measurements and tests carried out by the inventor on many different types of soil show that ozone is formed on virtually all kinds of soil containing moisture when they are illuminated with UV-B radiation. The tests also show that if the soil is completely dry and pure no ozone is formed no matter how intense the UV-B radiation might be. But under natural conditions there will as a rule always be some moisture present in most types of soil, so that for large parts of the world's land masses, the near-ground ozone formation will probably be a factor that limits or reduces the growth rate of plants, and which thus represents a hitherto unheeded but nevertheless serious problem in the production of useful plants.

The inventive idea is based on the aforementioned discovery in that the film or membrane according to the invention is endowed with the ability to destroy oxidants. Thus, the problem of oxidants damaging plant tissue will be reduced or eliminated in two ways: 1) by eliminating the production of ozone on the soil surface, and 2) by helping to destroy the part of the airborne ozone that comes into contact with the film or the ground. Thus, the concentration of ozone or oxidants in the microlayer is reduced or eliminated so that the scope of ozone damage to plants will at least be greatly reduced and at best eliminated by using a film according to the invention. This has been confirmed by field tests where the ozone concentration in the reference air above the microlayer without membrane covering was about 50 ppb and the ozone layer in the membrane's microlayer was 10-20 ppb. When testing out the film according to the invention in calm laboratory conditions, the air values showed about 50 ppb ozone 90 cm above ground level and 2 ppb in the microlayer about 1-2 mm above the membrane surface.

For many applications of the invention, it will be important to secure an optimally efficient and durable oxidant-destroying effect. This can be obtained by preferably composing the basic mixture and optionally the additives of compounds which have antioxidising properties per se, i.e., compounds which have low electron affinity and thus have a reducing effect on the environment. This functionality of the film or membrane according to the invention can be compared with the functionality of a sacrificial anode in corrosion protection; the film or membrane should be the first to be attacked by the oxidants in the microlayer so that as long as some film or membrane remains in the soil surface, the oxidants will leave the plant tissue "in peace". All components of the basic mixture such as organic material, thickening agent or setting agent and pigment should preferably be antioxidising, but the desired effect can of course also be obtained by just one or two of the basic components acting as antioxidants as long as the other components do not have such an oxidising effect on the environment that they offset or counteract the effect of the antioxidising component or components. In cases where mineral pigments are added to the film, it is therefore preferable to choose pigments on the basis of their optical properties and their antioxidising properties so as to thereby combine the need for albedo regulation and elimination of oxidants in the microlayer, including ozone. As for the other additives to the basic mixture according to the invention, it is preferable to use pigment substances that serve as nutrients in the soil and that are thus biologically degradable and sustainable, and which preferably are industrial or household waste substances. Examples of suitable and preferred substances are ground crab shell, shells, chlorophyll in the form of ground plant debris, lime, etc.

It is also envisaged that the film according to the invention could have one or more fertiliser compounds added to further increase the effect as a growth promoting medium. There are no limits or guidelines of preferred choices of fertilisers that could be used, except that some conventional fertilisers help to increase the production of oxidants by the ground surface. The measurements conducted by the inventor show that the oxidation capacity of soil with added standard agricultural fertiliser, including artificial fertiliser, show that several of the fertiliser types form dangerously high oxidation levels of more than 50 ppb. These must as a general rule be avoided. The measurements show that in the layer from 1 mm to 10 mm above solid soil mass that is irradiated by sunlight, some of the tested fertiliser types raise the level of oxidants in the layer above the soil surface to more than several hundred ppb O₃. It is therefore preferable to choose fertilisers that are biologically degradable and antioxidising, and which preferably are industrial or household waste substances. Examples of preferred fertiliser compounds are ground fish guano, animal manure, bird guano, urea residue etc. In addition, when there is a special need to provide the soil with more nutrients, artificial fertiliser can also be mixed into the film, i.e. inorganic nutrient salts such as potassium nitrate, ammonium phosphate, potassium phosphate and the like, and/or trace substances or so-called micronutrients such as boron, copper, molybdenum, manganese and the like.

In cases where it is expedient that the film according to the invention should have an impact on a larger cross-section of the soil, foaming agents could be added to increase the volume or thickness of the film. The addition of, for example, sulphonates, soap and the like to the liquid mixture immediately before it is to be sprayed onto the soil whilst stirring the liquid vigorously during the injection of air, will form a suspension that can increase the volume of the film by a factor in the range of 5-10. This will give a film with a greater thickness, in part because some of the air bubbles will remain entrapped by the film after it has set. The suspension can also be produced by injection of CO₂ gas, and thus give the plant roots direct access to CO₂. Tests on the plant variety cress, Lepidium sativum, show that a 10% increase in growth and yield can easily be obtained compared with films without CO₂ gas bubbles.

Another feature of the invention is that it can be composed so that it cannot bum, or bums very poorly. Tests have shown that in cases where the films or membranes are given a relatively high content of non-combustible substances such as salts, minerals, stone pigments and non-combustible plants and the like and a relatively low level of water stabilisers that are oil or wax based, a cover is obtained that is virtually non-combustible. When subjected to strong heat, this cover will in practice boil and evaporate without catching fire. This feature makes it possible to use the invention as a growth-inhibiting and/or growth-regulating means that is laid on recently cleared firebreaks in dense vegetation where there is a danger of forest fires and the like. The cover will make a contribution as a fire-retardant means both by constituting a physical barrier (firebreak) to the spread of a possible vegetation fire and by preventing the establishment of new airborne seed germinating varieties in the newly cleared firebreak, so that the establishment of new vegetation (after ploughing) can effectively be restricted in the firebreaks throughout the growing season. This effect can be further increased by adding salts in amounts as described above. The combination of this feature with the incorporation of, for example, grass seeds in the basic mixture will enable a decorative effect to be obtained in that the invention helps to promote desired grass growth in firebreaks whilst eliminating or greatly reducing the establishment of combustible weeds. Alternatively, a membrane or film that prevents all vegetation establishment but is made decorative by the use of pigment additives could be laid.

### Prefabricated dry powder mixtures

To make the invention readily available and easy to use it is intended to put it on the market in the form of prefabricated dry powder mixtures which on use are dissolved in water or another suitable solvent in order to then be spread over the soil area to be treated in an appropriate manner. Without going into detail, it is, as mentioned, preferable to use some form of spraying equipment for this purpose, but any known method that will result in an even distribution of the liquid over and/or in the soil may of course be used.

The dry powder mixtures listed below will dissolve readily in water, and will after a time set into a solid film or membrane on top of the soil to which the solution has been applied. The examples given here are designed to form surface films or membranes that enhance the growth conditions for plants by, *inter alia,* regulating the soil temperature, increasing nutrient uptake, and reducing oxidant damage to plant tissue, and are intended for use in agriculture, green areas and the like. The powder mixtures can be regarded as a two-component system which all have the same basic powder mixture.

In general, the basic mixture should comprise one or more organic raw materials in amounts of from 1 to 10 parts by weight, one or more thickening agents in amounts of from 0.1 to 10 parts by weight and one or more pigments in amounts of from 2 to 50 parts by weight. The basic mixture may also comprise from 0.1 to 10 parts by weight of microalgae.

A specially preferred basic mixture is based on the use of sea grass, seaweed and/or kelp as organic raw material. But as mentioned in the above, any organic materials from the plant and animal kingdom can be used provided they are suitable for grinding into a dry powder which subsequently will dissolve in water and act as a binder in the film or membrane into which the liquid sets. Microalgae have been used as pigment additive in the preferred basic mixture. This is optional; the membrane will function just as well if only minerals pigments are used.

The preferred basic mixture can, when calculated on the basis of one litre of liquid mixture, be produced by grinding about 10 grams of fresh sea grass, seaweed and/or seagrass, and drying the mixture during exposure to UV light in sufficient doses to sterilise the powder mixture, and during simultaneous exposure to an E-field with negative polarity to saturate the powder mixture with electrons. This results in from about 3 to 6 grams of dry powder mass chiefly from the leaves of the plants. The liquid material from the stem tissue in, for example, seaweed is used as thickening agent for the dry substances. Marine vegetation has a high fertiliser value and can be easily be included in mixtures containing other organic material. Then between 0.01 and 1 grams of micro algae, 0.1 to 3 grams of dispersed/ emulsified binder/thickening agent (polysaccharides, lignin, xanthan and the like) and between 2-25 grams mineral pigments, fibres and fillers are added. All the ingredients are in powder form and are water-soluble, and the amounts given are adapted to give one litre of liquid. The preferred basic mixture is summarised in Table 1.

One litre of liquid mixed with the amounts of dry matter as given in Table 1 will, when sprayed on an area of 1 m², form a surface membrane having a thickness of 0.1-10 mm per m² depending on the type of soil it is sprayed onto. If this mixture is applied to warm, dry desert sand, a membrane layer of about 2 mm thickness will be formed which will be established on the sand surface without soaking into the sand profile to any appreciable degree. If the basic mixture is applied to the same sand surface after precipitation or watering, it will form a membrane of natural appearance of up to 10 mm thickness where the sand corns also act as reinforcement and maintain natural permeability.

**Table 1 Composition ratio and amount of a preferred basic mixture to give one litre of liquid according to the invention**

| **Amount (g)** | **Ingredient** | **Property/consistency** | **Oxidation factor¹** |
|---|---|---|---|
| 3 | Sea grass, seaweed and/or kelp | Floury powder that is water-soluble | 7 |
| 0.01 -10 | Microalgae | Chosen according to colour, serve as pigment and fertiliser | 2 |
| 0.01 - 6 | Xanthan | Film-forming thickening agent | 12 |
| 2 - 25 | Mineral pigments | Determine the reflection, absorption and transmission properties of the film | 1 - 200 |

| | | | |
|---|---|---|---|
| 1) Weighted in relation to pure air set at an oxidation factor of 44 | | | |

In addition to the basic mixture, some additives must often be added to give the resulting surface film or membrane the necessary properties as mentioned above. In Table 2 examples are given of some preferred additives that will endow the basic powder mixture with the said properties. Several different components are listed for each type of additive (pigment, binder etc.) and one, two or as many as desired of each type of additive can be used provided that they are used within the quantitative ratios given for each component in Table 2. Proportioning limits for four different climate zones are given: I. Nordic climate, II. Northern European climate, III. Southern European climate, IV. Equatorial climate, and these should be understood as upper and lower limits for each type of additive in order to obtain the desired effect. Normally, the prefabricated dry powder mixture should contain at least one component from each group, i.e., at least one binder, one pigment, one fibre component etc.

It should be pointed out that when the invention is to be used for purposes other than as plant growth promoting means in the climate zones listed, the limits given for proportions and composition of the additives will differ greatly from the limits given above. For example, up to 80% water stabiliser and only 20% basic mixture will be used in cases where it is desirable to have a pigmented cover of maximum durability. The large range of possible applications of a film or membrane according to the invention means that it is possible to use films or membranes made of the basic mixture with from none to all of the named additives added, and where each additive may be from around 0 to almost 100% of the total mixture. The only limiting criterion is that the basic mixture must be present in such a large amount that a membrane or film is formed on application to the soil mass to be treated. For example, for decorative covers on solid ground (rock or the like), the basic mixture may be present in very small amounts and still set to form a solid film.

**Table 2 Preferred components and proportions that are suitable for forming surface membranes which promote growth conditions for four different climate zones: I. Nordic, II. Northern European, III. Southern European, and IV. Equatorial climate. The proportions are given in percentage by weight of dry powder including the basic mixture given in Table 1.**

| **Agent** | **Ingredient** | **Climate zone** | | | |
|---|---|---|---|---|---|
| | | **I** | **II** | **III** | **IV** |
| | Alginate | 0.01-60 | 0.02-60 | 0.03-60 | 0.04-60 |
| Binder | Fish protein | 0.1-10 | 0.1-11 | 0.1-12 | 0.1-13 |
| | Animal protein | 0.01-2 | 0.02-3 | 0.03-4 | 0.04-5 |
| Thickening agent | Xanthan | 0.01-60 | 0.01-50 | 0.01-40 | 0.01-30 |
| Softener | Soap | 0.1-20 | 0.2-25 | 0.3-30 | 0.4-40 |
| | Mucilage | 0.1-20 | 0.1-20 | 0.1-20 | 0.1-20 |
| Water stabiliser | Plant oil | 0.1-25 | 0.1-20 | 0.1-10 | 0.1-15 |
| | Wax | 0.5-5 | 0.1-4 | 0.1-3 | 0.1-5 |
| | Plant fibre | 0.5-10 | 0.5-10 | 0.5-15 | 0.1-30 |
| | Cellulose fibre | 0.5-4 | 0.5-5 | 0.5-12 | 0.1-30 |
| | Wool fibre | 0.5-4 | 0.5-5 | 0.5-12 | 0.1-30 |
| Fibre | Animal hair | 0.5-4 | 0.5-5 | 0.5.12 | 0.1-30 |
| | Human hair | 0.5-4 | 0.5-5 | 0.5-12 | 0.1-30 |
| | Pigs' bristle | 0.5-4 | 0.5-5 | 0.5-12 | 0.1-30 |
| | Wood fibre | 0.5-4 | 0.5-5 | 0.5-12 | 0.1-30 |
| | Crystal gel | 0.5-4 | 0.5-7 | 0.5-12 | 0.5-22 |
| | Titanium white | 0.5-1 | 0.5-3 | 0.5.5 | 0.5-7 |
| | Shells | 0.1-1 | 0.1-5 | 0.1-7 | 0.1-9 |
| Pigments | Crab shell | 0.1-1 | 0.1-7 | 0.1-9 | 0.1-11 |
| | Chlorophyll | 0.1-3 | 0.1-9 | 0.1-11 | 0.1-15 |
| | Green plant dye | 0.1-7 | 0.1-14 | 0.1-16 | 0.1-21 |
| | Sawdust | 0.1-1 | 0.1-2 | 0.1-3 | 0.1-4 |
| Filler | Bone meal | 0.1-05 | 0.1-2 | 0.1-5 | 0.1-14 |
| | Fish meal | 0.1-2 | 0.1-3 | 0.1-4 | 0.1-10 |
| | Animal manure | 0.5-10 | 0.5-20 | 0.5-20 | 0.5-20 |
| Fertiliser | Urea | 0.1-5 | 0.1-7 | 0.5-8 | 0.5-9 |
| | Fish guano | 0.1-5 | 0.1-5 | 0.1-15 | 0.1-15 |
| | Ash | 0.1-1 | 0.1-3 | 0.5-10 | 0.5-15 |
| Electrical | Carbon | 0.5-0.5 | 0.5-1 | 0.5-1.5 | 0.5-2 |
| conductor | Mineral salt | 0.01-2 | 0.01-4 | 0.02-5 | 0.02-8 |
| Foaming agent | Soaps | 0.5-10 | 0.5-10 | 0.5-10 | 0.5-10 |
| pH regulator | Lye, ash solution | 0.5-10 | 0.5-10 | 0.5-10 | 0.5-10 |

### Preferred embodiments of the invention

The invention will now be described in even greater detail in the form of especially preferred exemplary embodiments of ready-mixed (including basic mixture and additives) dry powder mixtures that will form surface films which promote plant growth for the four climate zones mentioned above. These examples are nothing other than especially preferred examples of how the invention is intended to be put on the market and should not be regarded as limiting the scope of the invention

### Example 1 Prefabricated dry powder mixture for the Nordic climate zone

This example is a powder mixture intended to be used to form a surface membrane that acts as a growth promoting means in agriculture and other industries where useful plants are cultivated in a relatively cold climate, with a soil temperature during spring farming in the range of 5-15°C. The membrane is laid in the spring in connection with soil preparation before sowing the useful plants and should have a physical lifetime that lasts until the plants are established and have grown so high that they shade the membrane from incident sunlight. The membrane should then disintegrate and become nutrition for the plants. This means that the lifetime of such a membrane is 1-2 months depending on germinating mass, moisture and microbiological density and activity. It is assumed that for this climate zone the pigment composition should absorb the sunlight to a greater degree than bare earth (albedo of less than 5%) so that the temperature in the root zone early in spring is increased. Furthermore, it has been found that the amount of water stabilising substances must be increased slightly to give the membrane sufficient water resistance in areas with a relatively large amount of precipitation, but not so much that the ability to release water vapour is too low to prevent the transport of water vapour from becoming so reduced that the soil does not manage to get rid of the rain water by evaporation in periods with abundant precipitation.

Table 3 lists components and their mixture ratio in percentage by weight of dry powder. Measurements have been made of the effect of this dry powder mixture when 10 grams of the powder are dissolved in 1 litre of water and sprayed homogeneously over 1 m² of soil of the type moist humus-containing sand. A surface membrane having a thickness of about 10 mm was formed. The membrane was established to simulate activity of sandy areas in the spring period, and the tests were carried out at the Norwegian Crop Research Institute (Planteforsk), Særheim Research Centre, in Jæren. Daily measurements were recorded. The weather conditions at the measuring times were slightly overcast and dry with an average daily temperature of 16-17°C. The measurements have been compared with measurements on a similar reference sand which was not covered with a membrane. All the results are summarised in Table 4.

**Table 3 The composition of an especially preferred dry powder mixture per litre of liquid for forming a surface membrane in the Nordic climate zone. The proportions are given in percentage by weight of dry powder.**

| **Ingredient** | **Raw material** | **Proportion of dry matter (wt %)** | **Colour** | **Fertiliser effect** | **Reflection (%)** |
|---|---|---|---|---|---|
| Binder | Alginate | 50 | Brownish grey | Good | 18 |
| Thick. agent | Xanthan | 20 | Whitish grey | Good | 21 |
| Softener | Mucilage | 10 | Colourless | Good | 38 |
| Stabiliser | Plant oil | 10 | Colourless | Good | 32 |
| Fibre | Plant fibre | 5 | Green | Average | 5 |
| Pigment | Gr. plant dye | 2 | Green | None | 3 |
| Mineral salt | Potassium carbonate | 0.5 | White | Good | 83 |
| pH stabiliser | Ash | 0.8 | Light grey | Good | 24 |
| Filler | Algin | 0.7 | Green | Good | 3 |
| Filler | Jellyfish | 1 | Colourless | Good | 3-98 |

**Table 4 Comparison of resulting growth parameters for soil covered with an energy-absorbing membrane according to Table 3 and soil without a membrane. The measurements were made in weather typical for Denmark in the spring. The air temperature was about 15°C. The membrane type was absorbent with an albedo of about 5%.**

| **Parameter** | **Without a membrane** | **With a membrane** |
|---|---|---|
| Oxidation factor¹ | 44 | 12 |
| Radiation of the sun W/m²) | 100 | 100 |
| Reflection of ground (W/m²) | 25 | 5 |
| Absorption (W/m²) | 75 | 95 |
| Soil moisture (%)² | 66 | 50 |
| Soil temperature (°C)² | 12 | 15 |

| | | |
|---|---|---|
| 1 Weighted in relation to fresh air set at oxidation factor 44. 2 Measured at a depth of 1-2 cm in the soil. | | |

### Example 2 Prefabricated dry powder mixture for Southern European climate zone

This example is a powder mixture intended to be used to form a surface membrane that functions as a growth-promoting means in agriculture and other industries in which useful plants are grown in a relatively hot and dry climate. Typical soil temperatures are in the range of 15-35°C, which means that the membrane should be adapted to lower the temperature in the soil. Typical problems for this climate zone are drought and accompanying surface erosion, which means that the membrane should be adapted to moderate evaporation of moisture from the soil and to bind surface particles. This is achieved by using lighter pigments than in Example 1 and a relatively higher proportion of fibres, preferably light fibres to endow the membrane with a greater ability to bind together loose soil masses.

The membrane is laid during the preparation of the soil for sowing and should have a physical lifetime which lasts until the plants are well developed and almost ready for harvesting. Then the membrane should disintegrate and become nutrition for the plants. Necessary lifetime will vary according to the useful plants that are to be grown, but a typical lifetime will be from 14 days to six months. It is intended that for this climate zone the pigment composition should reflect sunlight to a greater degree than bare soil so that the temperature in the root zone is lowered. The reflection properties of the membrane last until the seedlings or plant mass and shadows cover the top of the membrane. The base of the plant or stalk and the membrane thus have a more shaded and more moist existence so that the rate of degradation of the membrane mass increases because of the higher biological activity under the membrane and the greater liquid penetration into the membrane material.

Table 5 lists components and their mixture ratio in percentage by weight of dry powder. Measurements have been made of the effect of this dry powder mixture when 3 grams of the powder are dissolved in 1 litre of water and sprayed homogeneously over 1 m² of nutrient-deficient desert sand in Kuwait so that a surface membrane having a thickness of about 1.5-20 mm was formed. The membrane was established in November 2002 and continuous measurements were made for 14 days. The weather conditions at the measuring times were slightly overcast and dry with an average daily temperature of 34°C. The measurements have been compared with measurements on a similar reference sand which was not covered with a membrane. All the results are summarised in Table 6.

In such areas the membrane will increase the crop mass by 100% as the soil type is too hard for seed establishment (anchorage), and too warm and dry for vegetation to become established without targeted adaptation of albedo, temperature, mechanical characteristics and moisture.

**Table 5 The composition of an especially preferred dry powder mixture per litre of liquid for forming a surface membrane in a Southern European - subtropical climate zone. The proportions are given in percentage by weight of dry powder.**

| **Ingredient** | **Raw material** | **Proportion of dry matter (wt %)** | **Colour** | **Fertiliser effect** | **Reflection (%)** |
|---|---|---|---|---|---|
| Binder | Alginate | 50 | Brownish grey | Good | 18 |
| Thick. agent | Xanthan | 9 | Whitish grey | Good | 21 |
| Softener | Mucilage | 15 | Colourless | Good | 38 |
| Fibre | Sea grass fib. | 12 | Brown | Good | 9 |
| Pigment | Crystal gel | 10 | Colourless | Good | 98 |
| Filler | Algin | 2 | Whitish grey | Good | 65 |
| Filler | Maize fibre | 1 | Light brown | Good | 20 |
| Filler | Fruit peel | 1 | White | Good | 33 |

**Table 6 Comparison of resulting growth parameters for soil covered with an energy-absorbing membrane according to Table 5 and soil without a membrane. The measurements were made in Kuwait. The air temperature was max 34°C.**

| **Parameter** | **Without a membrane** | **With a membrane** |
|---|---|---|
| Oxidation factor¹ | 44 | 14 |
| Radiation of the sun (W/m²) | 800 | 800 |
| Reflection of ground (W/m ²) | 200 | 270 |
| Absorption (W/m ²) | 600 | 530 |
| Soil moisture (%)² | 12 | 30 |
| Soil temperature (°C)² | 31 | 20 |

| | | |
|---|---|---|
| 1 Weighted in relation to fresh air set at oxidation factor 44. 2 Measured at a depth of 1.5 cm in the soil. | | |

### Example 3 Prefabricated dry powder mixture for an equatorial climate zone

This example is a powder mixture intended to be used to form a surface membrane that functions as a growth-promoting means in agriculture and other industries in which useful plants are grown in an equatorial climate. Typical soil problems in this geographical area (as for example, Central America) are mainly high soil temperature and erosion in the drought periods and low soil temperature and moisture in the rainy seasons, so that the object of using the membrane in this case is to control the soil temperature and water evaporation by determining reflection in relation to representative vegetation, and the mechanical properties strength of the soil surface.

The membrane in such areas is pigmented to a desirable reflection level so that the soil temperature is adjusted to a desirable level. It is believed that for the equatorial climate zone the pigment composition must/should reflect sunlight to a greater degree than bare soil so that the temperature in the root zone is lowered. In addition, it is believed that the main mixture should have added thereto relatively large proportions of fibre, preferably light fibres and liquid stabilisers so that a mechanically strong film with high binding ability and water resistance is formed.

The membrane is laid during the preparation of the ground for sowing and should have a physical lifetime which lasts until the plants are well developed and almost ready for harvesting. Then the membrane should disintegrate and become nutrition for the plants. Necessary lifetime will vary according to the useful plants that are to be grown, but a typical lifetime will be from 14 days to six months.

Table 7 lists the components and their mixture ratio in percentage by weight of dry powder. Measurements have been made of the effect of this dry powder mixture when 10 grams of the powder are dissolved in 1 litre of water and sprayed homogeneously over 1 m² of dried-out arable soil in Mexico so that a surface membrane having a thickness of about 0.2 mm was formed. The membrane was established in April 2001 and measurements were taken after 2 and 10 days. The weather conditions at the measuring times were slightly overcast and dry with an air temperature of around 35°C. The measurements have been compared with measurements on a similar reference sand which was not covered with a membrane. All the results are summarised in Table 8.

In such areas the membrane will increase the crop mass by 20-100% as the soil type is at times too hot and dry for vegetation to become established without targeted adaptation of albedo, temperature, and moisture.

**Table 7 The composition of an especially preferred dry powder mixture per litre of liquid for forming a surface membrane in an equatorial climate zone. The proportions are given in percentage by weight of dry powder.**

| **Ingredient** | **Raw material** | **Proportion of dry matter (wt%)¹** | **Colour** | **Fertiliser effect** | **Reflection (%)** |
|---|---|---|---|---|---|
| Binder | Alginate | 60-50 | Brownish grey | Good | 18 |
| Thick. agent | Xanthan | 1-4 | Whitish grey | Good | 21 |
| Softener | Mucilage | 15-17 | Colourless | Good | 38 |
| Fibre | Sea grass fib. | 5-1 | Brown | Good | 9 |
| Pigment | Crystal gel | 12-14 | Colourless | Good | 98 |
| Pigment | TiO₂ | 2-4 | White | None | 84 |
| Filler | Algin | 1-2 | Whitish grey | Good | 65 |
| Filler | Maize fibre | 1-2 | Light brown | Good | 20 |
| Filler | Fruit peel | 1-2 | White | Good | 33 |
| Fibre -long | Cellulose | 2-4 | White | Good | 29 |

| | | | | | |
|---|---|---|---|---|---|
| 1 A greater percentage by weight of alginate is used on sand and xanthan on soil. | | | | | |

**Table 8 Comparison of resulting growth parameters for soil in equatorial climate zone covered with a membrane according to Table 7 and soil without a membrane.**

| **Parameter** | **Without a membrane** | **With a membrane** |
|---|---|---|
| Oxidation factor¹ | 44 | 14 |
| Radiation of the sun (W/m²) | 1000 | 1000 |
| Reflection of ground (W/m ²) | 200 | 700 |
| Absorption (W/m ²) | 800 | 300 |
| Soil moisture (%)² | 20 | 30 |
| Soil temperature (°C)² | 40 | 22 |

| | | |
|---|---|---|
| 1 Weighted in relation to fresh air set at oxidation factor 44. 2 Measured at a depth of 1.5-2 cm in the soil. | | |

### Results from tests on cress, Lepidium sativum

To verify the invention, tests have been carried out on the effect of the film on the cress plant Lepidium sativum in seed trays illuminated by artificial sunlight. A fluorescent tube which also gave UVA and UVB rays was used as light source. The tests were carried out at the Norwegian Crop Research Institute (Planteforsk), Særheim Research Centre, in Jæren, Norway.

The trays were 250 mm wide, 600 mm long and 60 mm deep and were filled with a 50mm thick layer of fertilised and moistened soil. Two grams of seeds of the cress plant Lepidium sativum were sown in each seed tray.

A membrane according to the invention was applied to the surface of the soil in each seed tray. The film had a different content of a type of light reflecting pigments in each tray, from 0% in tray 5 to 80% in tray 1. The tests took place over a period of 18 days, and during the test period no liquid, fertiliser or other elements were added to the soil in the seed trays. The air temperature was 16°C throughout the test period. The results are summarised in Table 9.

The tests show that the temperature in the soil under the film dropped linearly as the content of the light-reflecting pigment in the film increased.

The electrical resistance in the soil was measured, and is a measurement of the moisture in the soil, with the highest resistance showing the lowest moisture in the soil, that is to say, the driest soil.

The tests show that the moisture in the soil increased as the content of light-reflecting pigments in the film increased.

**Table 9 The results of growth tests on the cress plant, Lepidium sativum in a series using trays covered with different surface film according to the invention.**

| **Parameters** | **Trays** | | | | |
|---|---|---|---|---|---|
| | **1** | **2** | **3** | **4** | **5** |
| Light reflecting pigment (%) | 80 | 60 | 40 | 20 | 0 |
| Soil temperature (°C) | 16.1 | 16.8 | 17.5 | 18.2 | 18.7 |
| Electrical resistance (Mohm/cm) | 0.005 | 0.007 | 0.010 | 0.014 | 0.020 |
| Germination time (hours) | 56 | 52 | 45 | 39 | 31 |
| Height after 18 days (mm) | 37 | 43 | 47 | 52 | 58 |
| Weight of crop after 18 days (g) | 8.4 | 11.2 | 19.4 | 21.1 | 27.9 |

The tests on germination and growth of the cress plants show that it is essential that the temperature in the soil should regulated to the correct level for the plant species used.

The germination time for the plants was reduced by about 50% when the temperature in the soil under the film rose by 2.6°C.

The weight of the crop after 18 days increased by more than 200% when the temperature in the soil rose by the same 2.6°C.

### Verification of the effect of electron saturation

To verify the effect of the feature of saturating/oversaturating the powder mixture with electrons, comparative assays were carried out on the antioxidation ability of the two identically composed powder mixtures, one of which was exposed to an ionising E-field to saturate it with electrons, whilst the other remained untreated.

The powder mixtures were composed as follows:
12% xanthan
50% polysaccharides produced from kelp
2% carbon,
0.9% phosphorus,
0,6% calcium, 12%
0.6% magnesium
0.7% sodium,
1.4% potassium,
0,2% iron,
0.4% zinc,
0,2% magnesium, and
30% reflecting particle mass (20% TriO₂ and 10% ground shells)

For each test, 3 grams of the powder mixture was mixed into 1.00 litres of water and then stirred to homogeneity in a blender. The solution was left to "rest" for about 12 hours before it was sprayed onto a sand sample for the formation of a surface membrane structure together with the sand. Then the membrane was exposed to the same intensity of artificial sunlight and the ozone concentration in the air 2-0 cm above the membrane was measured continuously. The frequency range of the lamp was set to simulate daylight with a normal content of UVA and UVB. The tests were conducted indoors in static air at a temperature of about 20°C.

To obtain electron saturation of the powder mixture the powder was placed between two electrostatic plates spaced 3 cm apart and to which a DC voltage of 1 MV was applied for some seconds. The untreated powder mixture was of course stirred into the water without being subjected to this ionising E-field.

The measurements showed that the ozone concentration 2 cm above the membrane formed by the powder mixture that had been subjected to the ionising E-field was between 2 and 8 ppb in the first five days after the formation of the membrane. The values then rose by about 1 ppb per day.

The measurements showed that the ozone concentration 2 cm above the membrane formed by the powder mixture that was untreated was between 12 and 23 ppb in the first five days after the formation of the membrane. The values then rose by more than 4 ppb per day.

This comparative test shows that saturating the powder mixture with electrons before dissolving it in the solvent and accompanying formation of the membrane gives results in that the antioxidising effect is more effective and the effect is more durable over time. This treatment gives an more efficient and durable membrane.

### References

1. Norman E. Borlaug, Special 30th Anniversary Lecture, The Norwegian Nobel Institute, Oslo, September 8, 2000.
2. Dr. agric. Leif Mortensen, the Norwegian Crop Search Institute (Planteforsk), Særheim Research Centre, Norway.

## Claims

1. A mixture for treating a soil surface and/or a soil mass, wherein the mixture is spread over the soil surface and/or arranged in the soil mass to be treated in such manner that a layer in the form of a film or membrane on the surface and/or some distance down in the soil to be treated is formed,
wherein
the mixture comprises a basic mixture of water-soluble, dried organic raw material, a film or membrane forming thickening agent and pigment,
wherein the basic mixture is a powder mixture and the dried organic raw material is a dried and ground organic raw material; and the basic mixture comprises at least one component which per se has a sufficient antioxidising effect to ensure that the membrane has an antioxidising effect on the surrounding environment of the film or membrane, **characterised in that** the powder mixture is saturated with electrons to at least electric neutrality.

2. A mixture according to claim 1,
**characterised in that** the powder mixture is oversaturated with electrons and has an excess of negative electric charges.

3. A mixture according to claims 1-2,
**characterised in that** the basic mixture may also contain and constitute a growth medium for microalgae.

4. A mixture according to claims 1-2,
**characterised in that** the basic mixture may be composed of from 1 to 50 parts by weight of organic raw material, 0.1 to 60 parts by weight of thickening agent and from 2-50 parts by weight of pigment.

5. A mixture according to claim 3,
**characterised in that** the basic mixture may also contain from 0.1 to 10 parts by weight of microalgae.

6. A mixture according to any one of claims 1 to 5,
**characterised in that** the organic material is any material originating from the natural environment, the animal or plant kingdom, and that, in a dried and ground state, it contains fibres and adhesive compounds so that the material will function as a binder in the resulting film or membrane.

7. A mixture according to claim 6,
**characterised in that** the raw organic material consists of substantially natural, industrial and/or household organic or biological waste.

8. A mixture according to claim 7,
**characterised in that** the vegetable debris is dried and ground seaweed, sea grass and/or kelp, and that 3 to 6 parts by weight thereof are used in the basic mixture.

9. A mixture according to claim 8,
**characterised in that** sea grass preferably comprises the species Spartina and/or reeds.

10. A mixture according to any one of claims 1 to 9,
**characterised in that** the thickening agent is xanthan or xanthan gum.

11. A mixture according to claim 10,
**characterised in that** the thickening agent is one or more alginates that are admixed and replace at leasta part of the xanthan or xanthan gum, or that the one or more alginates replace all the xanthan or xanthan gum.

12. A mixture according to claim 10,
**characterised in that** the xanthan or xanthan gum is added in an amount of from 0.1 to 6 parts by weight.

13. A mixture according to any one of claims 1 to 12,
**characterised in that** when it is desired to form a film or membrane having a high degree of reflection, one or more of the following materials in dry powder form are used as pigments: stone, lime, sand, clay, chalk, shells, white mineral pigments such as TiO₂, white plant dyes and/or white plant fibres such as cotton, bog cotton or algae-based components having light characteristics.

14. A mixture according to any one of claims 1to 12,
**characterised in that** when it is desired to form a film or membrane having a low degree of reflection, one or more of the following materials in dry power form are used: ash, coal, soot, carbon black, graphite and other known forms of elementary carbon and other pigments such as ochre, bone, animal shells, marine shells, fish-scales, mineral pigments, plant dyes, plant pigments or algae-based components having dark characteristics.

15. A mixture according to 13,
**characterised in that** the pigments are added in an amount of from 0.1 to 25 parts by weight, preferably from 0.1 to 10 parts by weight.

16. A mixture according to claim 14,
**characterised in that** the pigments are added in an amount of from 0.1. to 25 parts by weight, preferably from 0 : 1 to 10 parts by weight.

17. A mixture according to any one of claims 1 to 12,
**characterised in that** the basic mixture has added thereto one or more of the following additives: binders, preservatives, fertilisers, water stabilisers, mineral salts, pH regulators, antioxidants and/or electrically conductive substances.

18. A mixture according to claim 17,
**characterised in that** the additives are also selected from substances or compounds which can be obtained in the form of natural, industrial and/or household organic or biological waste, and which preferably act as antioxidants.

19. A mixture according to claim 17,
**characterised in that** the binders comprise organic glue and adhesive agents having a high protein content, preferably albumin glue, casein glue, animal glue, agar, alginic acid, ground acorn barnacles, latex and/or sap.

20. A mixture according to claim 19,
**characterised in that** the binders are added in an amount of from 0.1 to 15 parts by weight, preferably 0.1 to 5 parts by weight.

21. A mixture according to any one of claims 17 to 20,
**characterised in that** the binders further comprise one or more fibres selected from the group consisting of cellulose fibre, plant fibre, textile fibre, animal fibre and reinforcing fibre.

22. A mixture according to claim 21,
**characterised in that** the fibre materials are added in an amount of from 0.5 to 30 parts by weight.

23. A mixture according to any one of claims 17 to 22,
**characterised in that** the fertiliser agents comprise one or more fertilisers selected from the group consisting of animal manure, fish guano, guano, urea, inorganic nutrient salts and micronutrients.

24. A mixture according to claim 23,
**characterised in that** the fertiliser materials are added in an amount of from 0.1 to 20, preferably 0.1. to 15, and more preferably 0.1 to 5 parts by weight of dry powder.

25. A mixture according to any one of claims 17 to 24,
**characterised in that** the electrically conductive additives comprise one or more substances selected from the group consisting of readily soluble mineral salts, ash and/or carbon fibres.

26. A mixture according to claim 25,
**characterised in that** the electrically conductive substances are added in an amount of from 0.1 to 15, preferably 0.1 to 5 parts by weight of dry powder.

27. A mixture according to any one of claims 17 to 26,
**characterised in that** the water stabilisers comprise one or more substances selected from the group consisting of plant oils, mucilage, organic waxes and organic oils.

28. A mixture according to claim 27,
**characterised in that** the water stabilisers are added in an amount of from 0.1 to 80, preferably from 0.1 to 25, and more preferably from 0.1 to 5 parts by weight of dry powder.

29. A mixture according to any one of claims 17 to 28,
**characterised in that** the pH regulators comprise one of more substances selected from the group consisting of sap, basic minerals, ash, and salts of the alkaline and alkaline earth metals.

30. A mixture according to claim 29,
**characterised in that** the pH regulator is added in an amount of from 0.1 to50, preferably from 0.1 to 10.

31. A mixture according to claim 30,
**characterised in that** the pH regulators are added in such quantity that the resulting membrane or film has a pH that is greater than 5, preferably in the range of pH 5 to 10.

32. Use of the mixture according to any one of the preceding claims to form a solid film or membrane in the surface and/or in a layer at a given depth in a soil mass for the purpose of regulating/optimising the conditions to promote growth of vegetation.

33. Use of the mixture according to any one of claims 1-31 to form a solid film or membrane in the surface of a soil mass for the purpose of binding loose surface particles and thereby reduce the local soil erosion.

34. Use of the mixture according to any one of claims 1-31 to form a solid film or membrane in the surface of a soil mass for the purpose of forming a decorative cover.

35. Use of the mixture according to any one of claims 1-31 to form a solid film or membrane in the surface of a soil mass for the purpose of altering the albedo of the soil surface.

36. Use according to claim 35, where the purpose of altering the albedo is to reduce the heating of and thus the air temperature immediately above a ground surface, by reducing the degree of absorption of incident sunlight exhibited by the ground surface.

37. Use of the mixture according to any one of claims 1-31 to form a solid film or membrane in the surface of a soil mass with the purpose of lowering the albedo of the soil surface in a limited area to obtain local heating of the covered soil surface with the object of forming upward currents of air above this area.

38. Use of the mixture according to any one of claimsl-31 to form a solid film or membrane in the surface of a soil mass for the purpose of acting as a growth- inhibiting membrane on a fire corridor in dense vegetation and/or to function as a non-combustible surface membrane or film.

39. Use of the mixture according to any one of claims 1-31 to form a solid film of membrane in the surface of a soil mass for the purpose of binding loose surface particles and thus reducing local soil erosion.

40. Use of the mixture according to any one of claims 1-31 to recreate cultivation conditions in order to re-establish vegetation in areas that have become too cold, too hot, too dry etc.

41. Use of the mixture according to any one of claims 1-31 to regulate/lower the C0₂ respiration rate and thus the amount of CO2 that is released per time unit from the biomass in a soil.

42. Use of the mixture according to any one of claims 1-31 to form a solid film or membrane in the surface of a soil mass for the purpose of reducing water loss from the soil surface in the form of evaporation.

43. Use of the mixture according to any one of claims 1-31 to form a solid film or membrane at a given distance or depth in a soil mass for the purpose of forming a water-impermeable membrane or film with the object of reducing water runoff to deeper soil layers.

44. A method of adjusting the albedo in an upper layer of a solid surface on the earth, **characterised in that** it comprises:
- using the basic mixture according to one of claims 12 to 15, and adapting the proportion and type of pigments added to the basic mixture in order to produce the desired albedo;
- adding additives such as disclosed in one or more of claims16-30; and
- using the mixture to form a surface membrane or film having the desired albedo on the surface to be treated.

45. A method of reducing the CO₂ respiration rate of a biomass in a soil mass,
**characterised in that** it comprises:
- using the basic mixture according to one of claims 12 and/or 14;
- adding additives such as disclosed in one or more of claims 16 to 31; and
- using the mixture to form a surface membrane or film having a relatively high albedo so that the temperature in the soil is lowered as a result of less absorption of incident sunlight.

46. A method of re-establishing vegetation in an area,
**characterised in that** it comprises:
- using the basic mixture according to one of claims 1 to 15;
- adding additives such as disclosed in one or more of claims 16 to 31; and
- using the mixture to form a surface membrane or film having an adjusted albedo so that the temperature in the local soil masses does not exceed and/or fall short of the comfort temperature for the roots of local natural plant and vegetation varieties.

47. A method according to claim 46,
**characterised in that** it further comprises:
- actively planting or sowing new plant or vegetation varieties in combination with laying out the membrane.

48. A method according to claim46 or 47,
**characterised in that** it further comprises:
- adapting the amount of water-stabilising substances in order to obtain a surface membrane or film that has desired water permeability levels to reduce water loss/drying out of the soil mass.

49. A method according to one of claims 45 to 47,
**characterised in that** it further comprises:
- laying a membrane or film which lies immediately under the roots of the vegetation and which has little water permeability in order to reduce or eliminate water loss to the deeper layers of soil.

50. A method for preventing re-establishment of vegetation in an area,
**characterised in that** it comprises :
- using the basic mixture according to one of claims 1 to 16;
- adding additives such as disclosed in one or more of claims 17 to 31, but with a relatively high proportion of binders and water-stabilising additives to form a strong membrane or film that is impenetrable to seed-germinating species and that is relatively weather and wear resistant; and
- using the mixture to form a surface membrane or film in the area to be treated.

51. A method according to claim 50,
**characterised in that** it further comprises:
- adding mineral salts to a minimum concentration of 300 ppm or more to render the membrane or film unsuitable for germinating seeds.

52. A method for forming a fire-retardant corridor in vegetated areas,
**characterised in that** it comprises:
- removing existing vegetation;
- using the basic mixture according to one of claims 1 to 16;
- adding additives such as disclosed in one or more of claims 17 to 31, but with a relatively high proportion of binders and water-stabilising additives to form a strong membrane or film that is impenetrable to seed-germinating species and that is relatively weather and wear resistant, and by using water stabilising substances with a relatively low content of combustible wax or oils; and
- using the mixture to form a surface membrane or film on the area from which the vegetation has been removed.

53. A method according to claim 52,
**characterised in that** it further comprises:
- adding mineral salts to a minimum concentration of 500 ppm or more to render the membrane or film non-combustible.

54. A method for establishing desired plant growth whilst preventing the establishment of unwanted vegetation,
**characterised in that** it comprises:
- removing existing vegetation in the area to be treated and ready the area for new planting;
- using the basic mixture according to one of claims 1 to 16;
- adding additives as such disclosed in one or more of claims 17 to31 ;
- adding seeds of the desired plant variety to the mixture; and lastly,
using the mixture to form a surface membrane or film on the area from which the vegetation has been removed and thus obtain a combined effect that the film or membrane holds in place the desired seeds so that they have time to germinate and become established whilst other unwanted air-transported seed types are prevented from becoming established by the same film or membrane.

## Patentansprüche

1. Eine Mischung zur Behandlung einer Erdoberfläche und/oder einer Erdmasse, wobei die Mischung derart über die Erdoberfläche verteilt wird und/oder in der Erdmasse angeordnet wird, dass eine Schicht in Form eines Films oder einer Membran auf der Oberfläche und/oder einige Distanz hinab in die zu behandelnde Erde gebildet wird,
wobei die Mischung eine Basismischung aus wasserlöslichem, getrocknetem, organischem Grundstoff, einem Film oder einer Membran formenden Verdickungsmittel und Pigment enthält,
wobei die Basismischung eine Pulvermischung ist und der getrocknete organische Grundstoff ein getrockneter und gemahlener organischer Grundstoff ist; und die Basismischung wenigstens eine Komponente enthält, die per se einen ausreichenden antioxidierenden Effekt hat, um sicherzustellen, dass die Membran einen antioxidierenden Effekt auf das umliegende Umfeld des Films oder der Membran hat, **dadurch gekennzeichnet, dass** die Pulvermischung wenigstens zu elektrischer Neutralität mit Elektronen gesättigt ist.

2. Eine Mischung gemäß Anspruch 1, **dadurch gekennzeichnet, dass** die Pulvermischung mit Elektronen übersättigt ist und einen Überschuss an negativen elektrischen Ladungen hat.

3. Eine Mischung gemäß den Ansprüchen 1 bis 2, **dadurch gekennzeichnet, dass** die Basismischung auch ein Wachstumsmedium für Mikroalgen enthalten und darstellen kann.

4. Eine Mischung gemäß den Ansprüchen 1 bis 2, **dadurch gekennzeichnet, dass** die Basismischung zusammengesetzt sein kann aus 1 bis 50 Gewichtsteilen von organischem Grundstoff, 0,1 bis 60 Gewichtsteilen von Verdickungsmittel und 2 bis 50 Gewichtsteilen von Pigment.

5. Eine Mischung gemäß Anspruch 3, **dadurch gekennzeichnet, dass** die Basismischung auch 0,1 bis 10 Gewichtsteile von Mikroalgen enthalten kann.

6. Eine Mischung gemäß einem der Ansprüche 1 bis 5, **dadurch gekennzeichnet, dass** das organische Material irgendein Material entstammend von der natürlichen Umwelt des Tier- oder Pflanzenreiches ist, und dass es im getrockneten und gemahlenen Zustand Fasern und klebende Verbindungen enthält, so dass das Material als Binder in dem resultierenden Film oder der Membran fungiert.

7. Eine Mischung gemäß Anspruch 6, **dadurch gekennzeichnet, dass** der organische Grundstoff im Wesentlichen aus natürlichem, industriellem und/oder im Haushalt anfallenden organischem oder biologischem Müll besteht.

8. Eine Mischung gemäß Anspruch 7, **dadurch gekennzeichnet, dass** die pflanzlichen Kleinteile getrockneter und gemahlener Seetang, Seegras und/oder Tang sind und dass 3 bis 6 Gewichtsteile davon in der Basismischung verwendet werden.

9. Eine Mischung gemäß Anspruch 8, **dadurch gekennzeichnet, dass** Seegras vorzugsweise die Arten Spartina und/oder Schilfgras (reeds) enthält.

10. Eine Mischung gemäß einem der Ansprüche 1 bis 9, **dadurch gekennzeichnet, dass** das Verdickungsmittel Xanthan oder Xanthan Gum ist.

11. Eine Mischung gemäß Anspruch 10, **dadurch gekennzeichnet, dass** das Verdickungsmittel ein oder mehrere Alginate ist, die vermischt sind und wenigstens einen Teil von Xanthan oder Xanthan Gum ersetzen, oder dass die ein oder mehreren Alginate alles Xanthan oder Xanthan Gum ersetzen.

12. Eine Mischung gemäß Anspruch 10, **dadurch gekennzeichnet, dass** Xanthan oder Xanthan Gum in Mengen von 0,1 bis 6 Gewichtsteilen zugegeben wird.

13. Eine Mischung gemäß einem der Ansprüche 1 bis 12, **dadurch gekennzeichnet, dass**, wenn es gewünscht ist, einen Film oder eine Membran, der/die einen hohen Reflektionsgrad hat, auszubilden, ein oder mehrere der folgenden Materialien in trockener Pulverform als Pigmente verwendet werden: Steine, Kalk, Sand, Ton, Kreide, Muscheln, weiße Mineralpigmente wie TiO₂, weiße Pflanzenfarbstoffe und/oder weiße Pflanzenfasern wie Baumwolle, Bog Baumwolle (bog cotton) oder algenbasierte Komponenten, die helle Eigenschaften haben.

14. Eine Mischung gemäß einem der Ansprüche 1 bis 12, **dadurch gekennzeichnet, dass,** wenn es gewünscht ist, einen Film oder eine Membran mit einem niedrigen Reflektionsgrad auszubilden, ein oder mehrere der folgenden Materialien in trockener Pulverform verwendet werden: Asche, Kohle, Ruß, Carbon Black, Graphit und andere bekannte Formen von elementarem Kohlenstoff und andere Pigmente wie Ocker, Knochen, Tierschalen, marine Muschelschalen, Fischschuppen, Mineralpigmente, Pflanzenfarbstoffe, Pflanzenpigmente oder algenbasierte Komponenten, die dunkle Eigenschaften haben.

15. Eine Mischung gemäß Anspruch 13, **dadurch gekennzeichnet, dass** die Pigmente in Mengen von 0,1 bis 25 Gewichtsteilen, bevorzugt von 0,1 bis 10 Gewichtsteilen zugegeben werden.

16. Eine Mischung gemäß Anspruch 14, **dadurch gekennzeichnet, dass** die Pigmente in Mengen von 0,1 bis 25 Gewichtsteilen, bevorzugt von 0,1 bis 10 Gewichtsteilen zugegeben werden.

17. Eine Mischung gemäß einem der Ansprüche 1 bis 12, **dadurch gekennzeichnet, dass** der Basismischung ein oder mehrere der folgenden Additive zugegeben werden: Binder, Konservierungsmittel, Düngemittel, Wasserstabilisatoren, Mineralsalze, pH-Regulatoren, Antioxidantien und/oder elektrisch leitfähige Substanzen.

18. Eine Mischung gemäß Anspruch 17, **dadurch gekennzeichnet, dass** die Additive auch ausgewählt sind aus Substanzen oder Verbindungen, die in Form von natürlichem, industriellem und/oder im Haushalt anfallenden organischem oder biologischem Müll erhalten werden können und die vorzugsweise als Antioxidantien wirken.

19. Eine Mischung gemäß Anspruch 17, **dadurch gekennzeichnet, dass** die Binder organische Kleb- und Haftmittel umfassen, die einen hohen Proteinanteil haben, bevorzugt Albuminkleber, Caseinkleber, Tierkleber, Agar, Alginsäure, gemahlenes Acorn Barnacles, Latex und/oder Pflanzensaft.

20. Eine Mischung gemäß Anspruch 19, **dadurch gekennzeichnet, dass** die Binder in Mengen von 0,1 bis 15 Gewichtsteilen, bevorzugt 0,1 bis 5 Gewichtsteilen zugegeben werden.

21. Eine Mischung gemäß einem der Ansprüche 17 bis 20, **dadurch gekennzeichnet, dass** die Binder darüber hinaus ein oder mehrere Fasern ausgewählt aus der Gruppe bestehend aus Cellulosefasern, Pflanzenfasern, Textilfasern, Tierfasern und verstärkenden Fasern umfassen.

22. Eine Mischung gemäß Anspruch 21, **dadurch gekennzeichnet, dass** das Fasermaterial in Mengen von 0,5 bis 30 Gewichtsteilen zugegeben wird.

23. Eine Mischung gemäß einem der Ansprüche 17 bis 22, **dadurch gekennzeichnet, dass** das Düngemittel ein oder mehrere Düngemittel ausgewählt aus der Gruppe bestehend aus Tierdung, Fisch-Guano, Guano, Harnstoff, anorganischen Nährstoffsalzen und Mikronährstoffen umfasst.

24. Eine Mischung gemäß Anspruch 23, **dadurch gekennzeichnet, dass** das Düngematerial in Mengen von 0,1 bis 20, bevorzugt 0,1 bis 15 und mehr bevorzugt 0,1 bis 5 Gewichtsteilen eines trockenen Pulvers zugegeben wird.

25. Eine Mischung gemäß einem der Ansprüche 17 bis 24, **dadurch gekennzeichnet, dass** die elektrisch leitfähigen Additive ein oder mehrere Substanzen ausgewählt aus der Gruppe bestehend aus vollständig löslichen Mineralsalzen, Asche und/oder Kohlenstofffasern umfasst.

26. Eine Mischung gemäß Anspruch 25, **dadurch gekennzeichnet, dass** die elektrisch leitfähigen Substanzen in Mengen von 0,1 bis 15, vorzugsweise 0,1 bis 5 Gewichtsteilen eines trockenen Pulvers zugegeben werden.

27. Eine Mischung gemäß einem der Ansprüche 17 bis 26, **dadurch gekennzeichnet, dass** der Wasserstabilisator ein oder mehrere Substanzen ausgewählt aus der Gruppe bestehend aus Pflanzenölen, Schleimstoffen, organischen Wachsen und organischen Ölen umfasst.

28. Eine Mischung gemäß Anspruch 27, **dadurch gekennzeichnet, dass** die Wasserstabilisatoren in Mengen von 0,1 bis 80, bevorzugt von 0,1 bis 25 und mehr bevorzugt von 0,1 bis 5 Gewichtsteilen eines trockenen Pulvers zugegeben werden.

29. Eine Mischung gemäß einem der Ansprüche 17 bis 28, **dadurch gekennzeichnet, dass** die pH-Regulatoren ein oder mehrere Substanzen ausgewählt aus der Gruppe bestehend aus Pflanzensaft, basischen Mineralen, Asche und Salzen von Alkali-und Erdalkalimetallen umfassen.

30. Eine Mischung gemäß Anspruch 29, **dadurch gekennzeichnet, dass** der pH-Regulator in einer Menge von 0,1 bis 50, bevorzugt 0,1 bis 10 zugegeben wird.

31. Eine Mischung gemäß Anspruch 30, **dadurch gekennzeichnet, dass** die pH-Regulatoren in solchen Mengen zugegeben werden, dass die resultierende Membran oder der Film einen pH-Wert hat, der größer als 5 ist, bevorzugt im Bereich von pH 5 bis 10.

32. Verwendung einer Mischung gemäß einem der vorstehenden Ansprüche zur Ausbildung eines festen Films oder einer Membran in der Oberfläche und/oder in der Schicht in einer bestimmten Tiefe in einer Erdmasse zum Zweck der Regulierung/Optimierung der Bedingungen zur Steigerung des Wachstums der Vegetation.

33. Verwendung der Mischung gemäß einem der Ansprüche 1 bis 31 zur Ausbildung eines festen Films oder einer Membran in der Oberfläche der Erdmasse zum Zweck der Bindung loser Oberflächenpartikel zur Reduktion der lokalen Erderosion.

34. Verwendung der Mischung gemäß einem der Ansprüche 1 bis 31 zur Ausbildung eines festen Films oder einer Membran in der Oberfläche von Erdmassen zum Zweck der Ausbildung einer dekorativen Schicht.

35. Verwendung der Mischung gemäß einem der Ansprüche 1 bis 31 zur Ausbildung eines festen Films oder einer Membran in der Oberfläche der Erdmasse zum Zweck der Veränderung der Albedo der Erdoberfläche.

36. Verwendung gemäß Anspruch 35, wo der Zweck der Veränderung der Albedo die Reduktion der Aufheizung der Geländeoberfläche und daher der Lufttemperatur unmittelbar oberhalb der Geländeoberfläche ist, durch die Reduktion des Grades der Absorption des einfallenden Sonnenlichts der ausgesetzten Geländeoberfläche.

37. Verwendung einer Mischung gemäß einem der Ansprüche 1 bis 31 zur Ausbildung eines festen Films oder einer Membran in der Oberfläche der Erdmasse zum Zweck, die Albedo der Erdoberfläche in einem begrenzten Areal zu verringern, um eine lokale Aufheizung der beschichteten Erdoberfläche zu erhalten, mit der Absicht, aufsteigende Luftströme über diesem Areal auszubilden.

38. Verwendung einer Mischung gemäß einem der Ansprüche 1 bis 31 zur Ausbildung eines festen Films oder einer Membran in der Oberfläche der Erdmasse zum Zweck, als wachstumsinhibierende Membran in einem Feuerkorridor in dichter Vegetation zu dienen und/oder als eine nicht entflammbare Oberflächenmembrane oder ein Film zu fungieren.

39. Verwendung der Mischung gemäß einem der Ansprüche 1 bis 31 zur Ausbildung eines festen Films oder einer Membran in der Oberfläche der Erdmasse zum Zweck, lose Oberflächenpartikel zu binden und **dadurch** die lokale Erderosion zu verringern.

40. Verwendung einer Mischung gemäß einem der Ansprüche 1 bis 31, um Anbaubedingungen wieder herzustellen, um Vegetation in Arealen, die zu kalt, zu heiß, zu trocken etc. geworden sind, neu aufzubauen.

41. Verwendung der Mischung gemäß einem der Ansprüche 1 bis 31 zur Regulation/Verringerung der CO₂-Atmungsrate und daher der Menge von CO₂, die pro Zeiteinheit von der Biomasse in der Erde freigesetzt wird.

42. Verwendung der Mischung gemäß einem der Ansprüche 1 bis 31 zur Ausbildung eines festen Films oder einer Membran in der Oberfläche der Erdmasse zum Zweck der Reduktion des Wasserverlusts von der Erdoberfläche in Form von Verdampfung.

43. Verwendung der Mischung gemäß einem der Ansprüche 1 bis 31 zur Ausbildung eines festen Films oder einer Membran in einem gegebenen Abstand oder einer Tiefe in der Erdmasse zum Zweck der Ausbildung einer wasserundurchlässigen Membran oder eines Films mit der Absicht, den Wasserablauf in tiefere Erdschichten zu reduzieren.

44. Ein Verfahren zur Anpassung der Albedo in oberen Schichten einer festen Oberfläche auf der Erde, **dadurch gekennzeichnet, dass** es umfasst:
- Verwendung der Basismischung gemäß einem der Ansprüche 12 bis 15 und Anpassen der Verhältnisse und Typen von Pigmenten, die zu der Basismischung zur Einstellung der gewünschten Albedo zugegeben werden;
- Zugabe der Additive, wie in einem oder mehreren der Ansprüche 16 bis 30 beschrieben; und
- Verwendung der Mischung zur Ausbildung einer Oberflächenmembran oder eines Films, der/die die gewünschte Albedo auf der zu behandelnden Oberfläche hat.

45. Ein Verfahren zur Reduktion der CO₂-Atmungsrate der Biomasse in der Erdmasse, **dadurch gekennzeichnet, dass** es umfasst:
- Verwendung der Basismischung gemäß einem der Ansprüche 12 und/oder 14;
- Zugabe der Additive wie in einem oder mehreren der Ansprüche 16 bis 31 beschrieben; und
- Verwendung der Mischung zur Ausbildung einer Oberflächenmembran oder eines Films, der/die eine relativ hohe Albedo hat, so dass die Temperatur in der Erde abgesenkt wird aufgrund von geringerer Absorption des einfallenden Sonnenlichts.

46. Eine Methode zum Wiederaufbau von Vegetation in Arealen, **dadurch gekennzeichnet, dass** sie umfasst:
- Verwendung der Basismischung gemäß einem der Ansprüche 1 bis 15;
- Zugabe von Additiven, wie sie in einem oder mehreren der Ansprüche 16 bis 31 beschrieben sind; und
- Verwendung der Mischung zur Ausbildung einer Oberflächenmembran oder eines Films, der/die eine angepasste Albedo hat, so dass die Temperatur in der lokalen Erdmasse die Komforttemperatur für die Wurzeln lokaler natürlicher Pflanzen und Vegetationsarten nicht überschreitet und/oder unterschreitet.

47. Ein Verfahren gemäß Anspruch 46, **dadurch gekennzeichnet, dass** es umfasst:
- aktives Pflanzen oder Säen neuer Pflanzen oder Vegetationsarten in Verbindung mit Auslegen der Membran.

48. Ein Verfahren gemäß Anspruch 46 oder 47, **dadurch gekennzeichnet, dass** es umfasst:
- Anpassen der Menge der wasserstabilisierenden Substanzen, um eine Oberflächenmembran oder einen Film zu erhalten, der/die das gewünschte Wasserpermeabilitätslevel zur Reduktion des Wasserverlusts/Austrocknung der Erdmasse hat.

49. Ein Verfahren gemäß einem der Ansprüche 45 bis 47, **dadurch gekennzeichnet, dass** es weiter umfasst:
- Auslegen der Membran oder des Films, welche/r direkt unter den Wurzeln der Vegetation liegt und welche/r eine geringe Wasserpermeabilität hat, um den Wasserverlust in tiefere Erdschichten zu reduzieren oder zu verhindern.

50. Ein Verfahren zur Verhinderung des Wiederaufbaus von Vegetation in Arealen, **dadurch gekennzeichnet, dass** es umfasst:
- Verwendung der Basismischung gemäß einem der Ansprüche 1 bis 16;
- Zugabe von Additiven, wie sie in einem oder mehreren der Ansprüche 17 bis 31 beschrieben sind, aber mit relativ hohen Anteilen von Bindern und wasserstabilisierenden Additiven zur Ausbildung einer starken Membrane oder eines Films, der/die undurchlässig für samenkeimende Species ist und der/die relativ wetter- und abrasionsbeständig ist; und
- Verwendung der Mischung zur Ausbildung einer Oberflächenmembran oder eines Films in dem zu behandelnden Areal.

51. Ein Verfahren gemäß Anspruch 50, **dadurch gekennzeichnet, dass** es weiter umfasst:
- Zugabe von Mineralsalzen in einer Minimalkonzentration von 300 ppm oder mehr, um die Membran oder den Film ungeeignet für keimende Samen zu machen.

52. Ein Verfahren zur Ausbildung eines feuerdämmenden Korridors in bewachsenen Arealen, **dadurch gekennzeichnet, dass** es umfasst:
- Entfernen der bestehenden Vegetation;
- Verwendung der Basismischung gemäß einem der Ansprüche 1 bis 16;
- Zugabe der Additive, wie sie in einem oder mehreren der Ansprüche 17 bis 31 beschrieben sind, aber mit einem relativ hohen Anteil an Bindern und wasserstabilisierenden Additiven zur Ausbildung einer starken Membran oder eines Films, der/die undurchlässig für samenkeimende Species ist und der/die relativ wasser- und abrasionsbeständig ist und bei der Verwendung wasserstabilisierender Substanzen einen niedrigen Anteil von brennbaren Wachsen oder Ölen aufweist; und
- Verwendung der Mischung zur Ausbildung einer Oberflächenmembran oder eines Films auf dem Areal, von dem die Vegetation entfernt worden ist.

53. Ein Verfahren gemäß Anspruch 52, **dadurch gekennzeichnet, dass** es weiter umfasst:
- Zugabe von Mineralsalzen in einer Minimalkonzentration von 500 ppm oder mehr, um die Membran oder den Film nicht brennbar zu machen.

54. Ein Verfahren zur Schaffung gewünschten Pflanzenwuchses, während die Entstehung von ungewünschter Vegetation verhindert wird, **dadurch gekennzeichnet, dass** es umfasst:
- Entfernen der existierenden Vegetation in dem zu behandelnden Areal und Vorbereitung des Areals für die Neupflanzung;
- Verwendung der Basismischung gemäß einem der Ansprüche 1 bis 16;
- Zugabe der Additive, wie sie in einem oder mehreren der Ansprüche 17 bis 31 beschrieben sind;
- Zugabe von Samen der gewünschten Pflanzenart zu der Mischung; und schließlich
Verwendung der Mischung zur Ausbildung einer Oberflächenmembran oder eines Films in einem Areal, in welchem die Vegetation entfernt wurde und **dadurch** Erhalten eines kombinierten Effekts, dass der Film oder die Membran die gewünschten Samen am Platz hält, so dass sie Zeit zur Keimung haben und feststehend werden, während andere ungewollte, durch Luft transportierte Samentypen durch die Membran oder den Film vom Feststehend werden abgehalten werden.

## Revendications

1. Mélange pour traiter une surface de sol et/ou une masse de sol, dans lequel le mélange est dispersé sur la surface de sol et/ou placé dans la masse de sol à traiter de telle manière qu'une couche sous la forme d'un film ou d'une membrane sur la surface et/ou à une certaine distance dans le sol à traiter se forme,
dans lequel
le mélange comprend un mélange de base d'une matière première organique sèche soluble dans l'eau, un agent épaississant formant un film ou une membrane et un pigment,
dans lequel le mélange de base est un mélange en poudre et la matière première organique sèche est une matière première organique séchée et broyée ; et le mélange de base comprend au moins un composant qui a intrinsèquement un effet antioxydant suffisant pour permettre à la membrane d'avoir un effet antioxydant sur l'environnement alentour du film ou de la membrane, **caractérisé en ce que** le mélange en poudre est saturé par des électrons à au moins la neutralité électrique.

2. Mélange selon la revendication 1, **caractérisé en ce que** le mélange en poudre est sursaturé avec des électrons et possède un excès de charges électriques négatives.

3. Mélange selon la revendication 1 ou 2, **caractérisé en ce que** le mélange de base peut également contenir et constituer un milieu de croissance pour des microalgues.

4. Mélange selon la revendication 1 ou 2, **caractérisé en ce que** le mélange de base peut être composé de 1 à 50 parties en poids d'une matière première organique, de 0,1 à 60 parties en poids d'un agent épaississant et de 2 à 50 parties en poids d'un pigment.

5. Mélange selon la revendication 3, **caractérisé en ce que** le mélange de base peut également comprendre de 0,1 à 10 parties en poids de microalgues.

6. Mélange selon l'une quelconque des revendications 1 à 5, **caractérisé en ce que** la matière organique est n'importe quelle matière provenant d'un environnement naturel, d'un animal ou d'une plante, et **en ce que**, à l'état sec et broyé, il comprend des fibres et des composés adhésifs de sorte que la matière agisse en tant que liant dans le film ou la membrane résultant(e).

7. Mélange selon la revendication 6, **caractérisé en ce que** la matière première organique se compose d'un déchet organique ou biologique essentiellement naturel, industriel et/ou ménager.

8. Mélange selon la revendication 7, **caractérisé en ce que** le débris végétal est une algue, une plante aquatique et/ou un varech sec(he)(s) et broyé(e)(s), et que de 3 à 6 parties en poids de celui-ci sont utilisées dans le mélange de base.

9. Mélange selon la revendication 8, **caractérisé en ce que** la plante aquatique comprend de préférence l'espèce Spartina et/ou les roseaux.

10. Mélange selon l'une quelconque des revendications 1 à 9, **caractérisé en ce que** l'agent épaississant est le xanthane ou la gomme de xanthane.

11. Mélange selon la revendication 10, **caractérisé en ce que** l'agent épaississant est un ou plusieurs alginates qui sont mélangés et remplacent au moins en partie du xanthane ou de la gomme de xanthane, ou le ou les alginates remplacent tout le xanthane ou toute la gomme de xanthane.

12. Mélange selon la revendication 10, **caractérisé en ce que** le xanthane ou la gomme de xanthane est ajouté(e) en une quantité de 0,1 à 6 parties en poids.

13. Mélange selon l'une quelconque des revendications 1 à 12, **caractérisé en ce que** lorsqu'il est souhaitable de former un film ou une membrane ayant un degré élevé de réflexion, une ou plusieurs des matières suivantes sous forme de poudre sèche sont utilisées en tant que pigments : pierre, chaux, sable, argile, craie, coquilles, pigments minéraux blancs tels que le TiO₂, colorants végétaux blancs et/ou fibres végétales blanches telles que le coton, le lin des marais ou des composants à base d'algues ayant des caractéristiques claires.

14. Mélange selon l'une quelconque des revendications 1 à 12, **caractérisé en ce que** lorsqu'il est souhaitable de former un film ou une membrane ayant un faible degré de réflexion, une ou plusieurs des matières suivantes sous forme de poudre sèche sont utilisées : cendres, charbon, suie, noir de carbone, graphite et d'autres formes connues de carbone élémentaire et d'autres pigments tels que l'ocre, les os, les coquilles d'animaux, les coquillages marins, les écailles de poisson, les pigments minéraux, les colorants végétaux, les pigments végétaux ou les composants à base d'algues ayant des caractéristiques sombres.

15. Mélange selon la revendication 13, **caractérisé en ce que** les pigments sont ajoutés en une quantité de 0,1 à 25 parties en poids, de préférence de 0,1 à 10 parties en poids.

16. Mélange selon la revendication 14, **caractérisé en ce que** les pigments sont ajoutés en une quantité de 0,1 à 25 parties en poids, de préférence de 0,1 à 10 parties en poids.

17. Mélange selon l'une quelconque des revendications 1 à 12, **caractérisé en ce que**, sont ajoutés au mélange de base, un ou plusieurs des additifs suivants : liants, conservateurs, fertilisants, stabilisateurs d'eau, sels minéraux, régulateurs de pH, antioxydants et/ou substances électriquement conductrices.

18. Mélange selon la revendication 17, **caractérisé en ce que** les additifs sont également choisis parmi les substances ou composés qui peuvent être obtenu(e)s sous la forme d'un déchet organique ou biologique naturel, industriel et/ou ménager, et qui agissent de préférence en tant qu'antioxydants.

19. Mélange selon la revendication 17, **caractérisé en ce que** les liants comprennent une colle organique et des agents adhésifs ayant une teneur élevée en protéine, de préférence la colle à base d'albumine, la colle à base de caséine, la colle animale, l'agar-agar, l'acide alginique, les bernacles broyés, le latex et/ou la sève.

20. Mélange selon la revendication 19, **caractérisé en ce que** les liants sont ajoutés en une quantité de 0,1 à 15 parties en poids, de préférence de 0,1 à 5 parties en poids.

21. Mélange selon l'une quelconque des revendications 17 à 20, **caractérisé en ce que** les liants comprennent en outre une ou plusieurs fibres choisies dans le groupe constitué par les fibres cellulosiques, les fibres végétales, les fibres textiles, les fibres animales et les fibres de renforcement.

22. Mélange selon la revendication 21, **caractérisé en ce que** les matières fibreuses sont ajoutées en une quantité de 0,5 à 30 parties en poids.

23. Mélange selon l'une quelconque des revendications 17 à 22, **caractérisé en ce que** les fertilisants comprennent un ou plusieurs fertilisants choisis dans le groupe constitué par le fumier d'animaux, le guano de poisson, le guano, l'urée, les sels nutritifs inorganiques et les micronutriments.

24. Mélange selon la revendication 23, **caractérisé en ce que** les fertilisants sont ajoutés en une quantité de 0,1 à 20, de préférence de 0,1 à 15, et plus préférablement de 0,1 à 5 parties en poids de poudre sèche.

25. Mélange selon l'une quelconque des revendications 17 à 24, **caractérisé en ce que** les substances électriquement conductrices comprennent une ou plusieurs substances choisies dans le groupe constitué par les sels minéraux facilement solubles, les cendres et/ou les fibres de carbone.

26. Mélange selon la revendication 25, **caractérisé en ce que** les substances électriquement conductrices sont ajoutées en une quantité de 0,1 à 15, de préférence de 0,1 à 5 parties en poids de poudre sèche.

27. Mélange selon l'une quelconque des revendications 17 à 26, **caractérisé en ce que** les stabilisateurs d'eau comprennent une ou plusieurs substances choisies dans le groupe constitué par les huiles végétales, les mucilages, les cires organiques et les huiles organiques.

28. Mélange selon la revendication 27, **caractérisé en ce que** les stabilisateurs d'eau sont ajoutés en une quantité de 0,1 à 80, de préférence de 0,1 à 25, et plus préférablement de 0,1 à 5 parties en poids de poudre sèche.

29. Mélange selon l'une quelconque des revendications 17 à 28, **caractérisé en ce que** les régulateurs de pH comprennent une de plusieurs substances choisies dans le groupe constitué par la sève, les minéraux basiques, les cendres et les sels de métaux alcalins et alcalino-terreux.

30. Mélange selon la revendication 29, **caractérisé en ce que** les régulateurs de pH sont ajoutés en une quantité de 0,1 à 50, de préférence de 0,1 à 10.

31. Mélange selon la revendication 30, **caractérisé en ce que** les régulateurs de pH sont ajoutés en une quantité telle que le film ou la membrane résultant(e) a un pH qui est supérieur à 5, de préférence dans la plage de pH de 5 à 10.

32. Utilisation du mélange selon l'une quelconque des revendications précédentes, pour former un film ou une membrane solide sur la surface et/ou dans une couche d'une profondeur donnée d'une masse de sol dans le but de réguler/optimiser les conditions afin de favoriser la croissance de la végétation.

33. Utilisation du mélange selon l'une quelconque des revendications 1 à 31, pour former un film ou une membrane solide sur la surface d'une masse de sol dans le but de lier les particules de la surface détachées et de réduire ainsi l'érosion locale du sol.

34. Utilisation du mélange selon l'une quelconque des revendications 1 à 31, pour former un film ou une membrane solide sur la surface d'une masse de sol dans le but de former un revêtement décoratif.

35. Utilisation du mélange selon l'une quelconque des revendications 1 à 31, pour former un film ou une membrane solide sur la surface d'une masse de sol dans le but d'altérer l'albédo de la surface du sol.

36. Utilisation selon la revendication 35, dans laquelle le but consistant à altérer l'albédo permet de réduire la chaleur de, et donc la température de l'air immédiatement au-dessus d'une surface d'un terrain, en réduisant le degré d'absorption de la lumière du soleil incidente produite par la surface d'un terrain.

37. Utilisation du mélange selon l'une quelconque des revendications 1 à 31, pour former un film ou une membrane solide sur la surface d'une masse de sol dans le but de réduire l'albédo de la surface du sol dans une zone limitée afin d'obtenir un chauffage local de la surface du sol recouverte avec pour objectif de former des courants d'air ascendants au-dessus de cette zone.

38. Utilisation du mélange selon l'une quelconque des revendications 1 à 31, pour former un film ou une membrane solide sur la surface d'une masse de sol dans le but d'agir en tant que membrane inhibant la croissance sur un corridor de feu dans une végétation dense et/ou de fonctionner en tant que membrane ou film de surface non combustible.

39. Utilisation du mélange selon l'une quelconque des revendications 1 à 31, pour former un film ou une membrane solide sur la surface d'une masse de sol dans le but de lier les particules de la surface détachées et de réduire ainsi l'érosion locale du sol.

40. Utilisation du mélange selon l'une quelconque des revendications 1 à 31, pour recréer des conditions de culture afin de ré-établir une végétation dans des zones qui sont devenues trop froides, trop chaudes, trop sèches, etc.

41. Utilisation du mélange selon l'une quelconque des revendications 1 à 31, pour réguler/réduire le taux respiratoire de CO₂ et par conséquent la quantité de CO₂ qui est libérée par unité de temps de la biomasse d'un sol.

42. Utilisation du mélange selon l'une quelconque des revendications 1 à 31, pour former un film ou une membrane solide sur la surface d'une masse de sol dans le but de réduire la perte d'eau de la surface du sol sous forme d'évaporation.

43. Utilisation du mélange selon l'une quelconque des revendications 1 à 31, pour former un film ou une membrane solide à une distance ou une profondeur donnée dans la masse de sol dans le but de former une membrane ou un film imperméable à l'eau avec pour objectif de réduire le ruissellement des eaux dans les couches plus profondes du sol.

44. Procédé d'ajustement de l'albédo dans une couche supérieure d'une surface solide sur terre, **caractérisé en ce qu'**il comprend :
- l'utilisation du mélange de base selon l'une quelconque des revendications 12 à 15, et l'adaptation de la proportion et du type de pigments ajoutés au mélange de base afin de produire l'albédo souhaité ;
- l'ajout d'additifs tels que ceux décrits dans l'une ou plusieurs des revendications 16 à 30 ; et
- l'utilisation du mélange pour former une membrane ou un film de surface ayant l'albédo souhaité sur la surface à traiter.

45. Procédé de réduction du taux respiratoire de CO₂ d'une biomasse d'une masse de sol, **caractérisé en ce qu'**il comprend :
- l'utilisation du mélange de base selon l'une des revendications 12 et/ou 14 ;
- l'ajout d'additifs tels que ceux décrits dans l'une ou plusieurs des revendications 16 à 31 ; et
- l'utilisation du mélange pour former une membrane ou un film de surface ayant un albédo relativement élevé de sorte que la température dans le sol soit réduite en raison d'une moindre absorption de lumière du soleil incidente.

46. Procédé de ré-établissement d'une végétation dans une zone, **caractérisé en ce qu'**il comprend :
- l'utilisation du mélange de base selon l'une quelconque des revendications 1 à 15 ;
- l'ajout d'additifs tels que ceux décrits dans l'une ou plusieurs des revendications 16 à 31 ; et
- l'utilisation du mélange pour former une membrane ou un film de surface ayant un albédo ajusté de sorte que la température dans les masses de sol locales n'excède pas et/ou n'atteigne pas la température de confort pour les racines des variétés de végétation et de plantes naturelles locales.

47. Procédé selon la revendication 46, **caractérisé en ce qu'**il comprend en outre :
- la plantation ou la semence active de nouvelles variétés de végétation ou de plantes en combinaison avec la mise en place de la membrane.

48. Procédé selon la revendication 46 ou 47, **caractérisé en ce qu'**il comprend en outre :
- l'adaptation de la quantité de substances de stabilisation de l'eau afin d'obtenir une membrane ou un film de surface qui a les taux de perméabilité à l'eau souhaités pour réduire la perte d'eau/l'assèchement de la masse de sol.

49. Procédé selon l'une quelconque des revendications 45 à 47, **caractérisé en ce qu'**il comprend en outre :
- la mise en place d'une membrane ou d'un film qui est placé(e) immédiatement sous les racines de la végétation et qui a une faible perméabilité à l'eau afin de réduire ou d'éliminer la perte d'eau dans les couches plus profondes du sol.

50. Procédé de prévention du ré-établissement de la végétation dans une zone, **caractérisé en ce qu'**il comprend :
- l'utilisation du mélange de base selon l'une quelconque des revendications 1 à 16 ;
- l'ajout d'additifs tels que ceux décrits dans l'une ou plusieurs des revendications 17 à 31, mais avec une proportion relativement élevée de liants et de substances de stabilisation de l'eau pour former une membrane ou un film solide qui est impénétrable par les espèces de germination de graine et qui est relativement résistant(e) aux intempéries et à l'usure ; et
- l'utilisation du mélange pour former une membrane ou un film de surface dans la zone à traiter.

51. Procédé selon la revendication 50, **caractérisé en ce qu'**il comprend en outre :
- l'ajout de sels minéraux à une concentration minimale de 300 ppm ou plus pour rendre la membrane ou le film inapproprié aux graines de germination.

52. Procédé de formation d'un corridor ignifuge dans des zones recouvertes de végétation, **caractérisé en ce qu'**il comprend :
- l'élimination de la végétation existante ;
- l'utilisation du mélange de base selon l'une quelconque des revendications 1 à 16 ;
- l'ajout d'additifs tels que ceux décrits dans l'une ou plusieurs des revendications 17 à 31, mais avec une proportion relativement élevée de liants et de substances de stabilisation de l'eau pour former une membrane ou un film solide qui est impénétrable par les espèces de germination de graine et qui est relativement résistant(e) aux intempéries et à l'usure, et par l'utilisation de substances de stabilisation de l'eau avec une teneur relativement faible en cire ou huiles combustible(s) ; et
- l'utilisation du mélange pour former une membrane ou un film de surface sur la zone de laquelle la végétation a été éliminée.

53. Procédé selon la revendication 52, **caractérisé en ce qu'**il comprend en outre :
- l'ajout de sels minéraux à une concentration minimale de 500 ppm ou plus pour rendre la membrane ou le film non combustible.

54. Procédé d'établissement d'une croissance végétale souhaitée tout en empêchant l'établissement d'une végétation non voulue, **caractérisé en ce qu'**il comprend :
- l'élimination de la végétation existante de la zone à traiter et la préparation de la zone pour une nouvelle plantation ;
- l'utilisation du mélange de base selon l'une quelconque des revendications 1 à 16 ;
- l'ajout d'additifs tels que ceux décrits dans l'une ou plusieurs des revendications 17 à 31 ;
- l'ajout au mélange de graines de la variété de la plante souhaitée ; et enfin
- l'utilisation du mélange pour former une membrane ou un film de surface sur la zone de laquelle la végétation a été éliminée et obtenir ainsi un effet combiné qui est que le film ou la membrane maintient en place les graines souhaitées de sorte qu'elles aient le temps de germer et de s'établir tandis que ce même film ou la même membrane empêche l'établissement des autres types de graines transportés par l'air et non voulus.
